Europäisches Patentamt

European Patent Office

Office européen des brevets

(19)

(11) **EP 1 260 920 A1**

(12) **EUROPEAN PATENT APPLICATION**

(43) Date of publication:
**27.11.2002 Bulletin 2002/48**

(51) Int Cl.7: **G06F 17/50**

(21) Application number: **01112579.6**

(22) Date of filing: **23.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Fraunhofer-Gesellschaft zur Förderung der angewandten Forschung e.V. 80636 München (DE)** | (72) Inventor: **Ginzburg, Irina, Dr. rer. nat 67659 Kaiserslautern (DE)**<br><br>(74) Representative: **Schoppe, Fritz, Dipl.-Ing. Patentanwälte Schoppe, Zimmermann, Stöckeler & Zinkler, Postfach 71 08 67 81458 München (DE)** |

(54) **Method and apparatus for computing an interface of a fluid in a space**

(57) An inventive method for computing an interface of a fluid in a space, the space being represented by a grid having cells, comprising providing, for a current time step, a quantity of the fluid in a cell and populations of the fluid in the cell, wherein each population has associated therewith a fluid moving in a direction from a predefined set of directions, wherein all populations for all directions of the predetermined set of directions in the cell sum up to a density in the cell, and the quantity of the fluid in the cell lies between zero and the density value; computing, for a subsequent time step, the quantity of the fluid in the cell based upon the populations of the fluid in surrounding cells from the current time step which are associated with directions directed into the cell; determining at least one population of the cell for the subsequent time step by propagating the post-collision populations from the current time step of the fluid from the surrounding cells into the cell; and calculating remaining populations of the cell, which have not been determined by the step of determining, by means of the following substeps: deriving (50) an extrapolated macroscopic velocity value of the fluid for the cell for the subsequent time step by extrapolating a macroscopic velocity value from a preceding time step and/or surrounding cells; computing (60) coefficients describing the relation between the populations for the cell and the actual macroscopic density and actual macroscopic momentum for the cell, by developing the relation between populations on the one hand and space and time on the other hand around an equilibrium condition, and by using the extrapolated macroscopic velocity value; computing (70) a macroscopic density value and a macroscopic momentum value by using the coefficients and the populations of the cell determined by the step of propagating; and computing (80) the remaining populations using the macroscopic density value and the macroscopic momentum value and the coefficients whereby all populations for the cell at the interface of the fluid in the space are obtained.

Figure 2

**Description**

The present invention relates generally to the computation and simulation of flow processes with a free interface as it is used, for example, in filling processes, injection molding and environmental engineering.

Numerical modeling of moving interfaces between immiscible fluids is important for many industrial applications, examples for which are injection molding, filling in receptacles, especially in food industries, oil industries and chemical engineering, and applications in environmental industries, i.e. hydrology of waters and channel systems. The computation and simulation obtained by the numerical modeling enables the proper design, modification and/or optimization of the forms to be filled such as, for example, receptacles, molding dies, river beds or courses of a river, and of the machines and devices for filling same. Examples for the fluids to be injected into the moulding die are metals, plastics, concretes, liquids such as beverages, water, benzine or food.

The numerical modeling and simulation of flow processes with free interfaces is always based on a numerical method of solving the flow dynamic relations with respect to a lattice, in conjunction with a method for treating the free interface. In this regard, solving the arising two phase incompressible Navier Stokes equations represents a difficult problem since pressure and velocity derivatives may have jump discontinuities at the fronts. Besides, a description of the interface motion itself represents a complicated task, wherein the main known approaches for describing the interface motion are surface tracking and surface capturing methods. The surface tracking methods explicitly treat the interface as a front interface having discontinuities. Contrary thereto, the surface capturing methods do not use an exact interface position to discretize the governing equations, but take it often into account during interface advection. Up to now, only surface capturing methods are able to treat real simulations with breaking up and fusing free interfaces.

Filling a die cavity represents a crucial step in metal casting since it determines the quality of the final product. At the same time, detailed descriptions of gas phase behavior during the filling stage is not necessary. Two phase problem reduces then to modeling of more viscous fluid with free boundary when interface boundary conditions should meet. In this way, the problem of high jumps of the coefficients of the parameters near the moving front is avoided. So far, many free interface approaches have been developed, but among these only the Lattice-Boltzmann (LB) approaches are most appropriate for being applied to complex simulations since all the other numerical methods not being based on the Lattice-Boltzmann approach involve a numerical effort that rises more than linear with respect to the number of discretization points thereby resulting in intolerably high computation times. However, no LB method of the prior art can handle realistic density ratios into two phase applications and, thus, there exists a need for a numerical method for computing an interface of a fluid in a space being, on the one hand, appropriate for multiphase applications and involving, on the other hand, a moderate computational effort.

It is the object of the present invention to provide a method and an apparatus for computing an interface of a fluid in a space which are robust and appropriate for complex applications such as, for instance, filling a receptacle having a complex geometry.

This object is achieved by a method according to claim 1 or 2, and an apparatus according to claim 18 or 19.

The present invention is based on the idea that computation and simulation of an interface of a fluid in a space which is represented by a grid having cells can be improved with respect to robustness if unknown populations at front nodes, i.e. the portions of fluid in the cell moving in one of a predetermined set of directions, which are not supplied by the population solution, e.g. the Lattice-Boltzmann equation, describing the relation between populations on the one hand and space and time on the other hand are "reconstructed" by use of coefficients decribing the relation between the populations for the cell and actual microscopic values such as density and momentum for the cell, the coefficients being derived from an extrapolated macroscopic velocity for the cell by extrapolating an microscopic velocity value from a proceeding time step and/or a surrounding cell. The coefficients are computed by developing the relation between populations on the one hand and space and time on the other hand around an equilibrium condition and by using the extrapolated microscopic velocity value. As a result, microscopic density and microscopic momentum values for the cell can be computed by using the coefficients and the already known populations of the cell previously determined by propagating the populations of the cells from a current time step. The microscopic density and microscopic momentum values can be used to compute the unknown populations using the microscopic density and microscopic momentum values and the coefficients whereby all populations for the cell at the interface of the fluid in the space are obtained. The thus reconstructed populations contribute to a more robust and exact computation of the interface of the fluid and, thus, enhance the applicability of the invention to a wide spectrum of applications.

According to an embodiment of the invention, the relation between populations on the one hand and space and time on the other hand is expressed by a Lattice-Boltzmann equation. Unknown populations at the interface cells, i.e. cells in which the number of post-collision populations that have been propagated thereinto from surrounding cells from the current time step are less than the total number of populations, are reconstructed by use of a Chapman-Enskog expansion for developing the Lattice-Boltzmann equation around the equilibrium condition.

In a specific embodiment, the first order Chapman-Enskog expansion is used at the interface. Due to its invariance with respect to rotation, the population solutions at the front are expressed naturally in a local coordinate system associated with the normal to interface, thereby facilitating the treatment of the free interface. Additionally, the population solution at the interface is completely expressed in terms of the macroscopic density and the macroscopic momentum in a 2D case. In 3D, it depends additionally on some combinations of the tangential derivatives of the macroscopic momentum. Since the macroscopic quantities, i.e. density and momentum, are not determined unless all populations in a given cell are obtained, the known populations arriving at a given interface cell from surrounding cells are used to locally derive the unknown populations. In order to obtain a linearized system, non-linear terms in the first order Chapman-Enskog expansion equation are linearized with respect to momentum or density, for example, by use of a extrapolated macroscopic velocity value or extrapolated macroscopic density and velocity values. The resulting solution for unknown populations at front nodes is implicitly expressed in the form of a linear combination of the known populations. Unknown macroscopic quantities from the solution of the local linearized system are obtained in least-square sense. It is possible to iterate this procedure in order to increase the robustness of the simulation by using the unknown macroscopic quantities obtained from the solution of the local linearized system for the extrapolation or approximation of extrapolated macroscopic values in the next iteration step.

In the following, preferred embodiments of the present invention are discussed in more detail with respect to the enclosed drawings.

Figure 1      is a flow chart showing steps for computing an interface of a fluid according to an embodiment of the present invention.

Figure 2      is a flow chart showing steps being involved in the step of calculating unknown populations of an interface cell in the flow chart of Figure 1.

Figures 3a,   3b, 3c, 3d and 3e are diagrams showing portions of a 2-dimensional grid wherein, for each cell, the known macroscopic momentums or populations, respectively, are indicated by arrows for consecutive reconstruction substeps.

Figure 4a     is a sketch illustrating the numbering and directions of the velocities of populations in the D2Q9 model.

Figure 4b     is a sketch illustrating the numbering and directions of the velocities of the populations in D3Q15 model.

Figure 5      is a flow chart shwoing steps for computing an interface of a fluid according to a specific embodiment of the present invention.

Figure 6      is flow chart showing steps being involved in the step of reconstructing unknown populations of an interface cell in the flow chart of Figure 5.

Figures 7a,   7b and 7c are sketches for illustrating specular reflections, local specular reflections, and specular reflections at a 2D corner, respectively, used to model the boundary conditions in accordance with an embodiment of the present invention.

Figure 8a,    8b and 8c are sketches illustrating the conditions at which action of the numerical diffusion takes place when the explicit upwind formulae according to an embodiment of the present invention is used, wherein three cases are distinguished.

Figures 9a    to 9j show a filling sequence during filling in a 2D horizontal cavity at $Re$ = 2.

Figures 10a   to 10f show a filling states during filling in the 2D horizontal cavity of figure 2, wherein, for simulation, three different grid sizes (columns, i.e. figures 10a-d, 10e-h, and 10i-l) and four different Reynold numbers (rows) were used.

Figures 11a   to 111 are graphs of the magnitude of error value for pressure, velocity modulus and fluid quantity between coarse-middle and middle-fine grids in the 2D cavity simulations of figures 9a-j and 10a-l.

Figures 12a   to 12f show a filling sequence during filling in a Hammer Box.

Figures 13a   and 13b are graphs of the density deviation the reference value $Re$ =2, $L^{lb}$ =40, for different LB inlet velocities $U^{lb}$ = 0.1 x $2^{-n}$, n = 2,3,4, and using different deviation definitions, i.e. $\delta\rho=(\bar{\rho}-\rho_0)$ and $\delta_\rho{}^s = (\bar{\rho}-\rho_0)$x$4^{4-n}$.

Figures 14a to 14f are graphs showing the total number of interface points occurring during the simulation of the filling process of Figures 9 and 10, as well as the number of interface points where the number of equations is less than the number of variables, the number of interface points where the linear system is singular, the number of interface points where negative populations appear after reconstruction, the number of interface cells wherein an interpolation is needed, and the number of new interface cells where interpolations are needed, respectively.

Figures 15a to 15f show a filling sequence during filling in a Campbell Box at $Fr$ = 5.56 and $Re$ = 165.

Figures 16a to 16f show a filling sequence during filling in a Campbell Box at $Fr$ = 5.965 and $Re$ = 3.2.

Figures 17a to 17f show a filling sequence during filling in a Sheffield box $Fr$ = 10.7, $Re$ = 24717.

Figures 18a to 18f show a filling sequence during filling in a Motoblock at $Re$ = 26507 and $Fr$ = 2.36.

Figures 19a and 19b show graphs comparing the effective filling of the Motoblock of Figure 18a to 18f with the exact filling with respect to different inlet velocities.

Before the present invention is described in the following by use of the exact underlying mathematical expressions and equations according to a specific embodiment of the present invention, the present invention is described without mathematical framework.

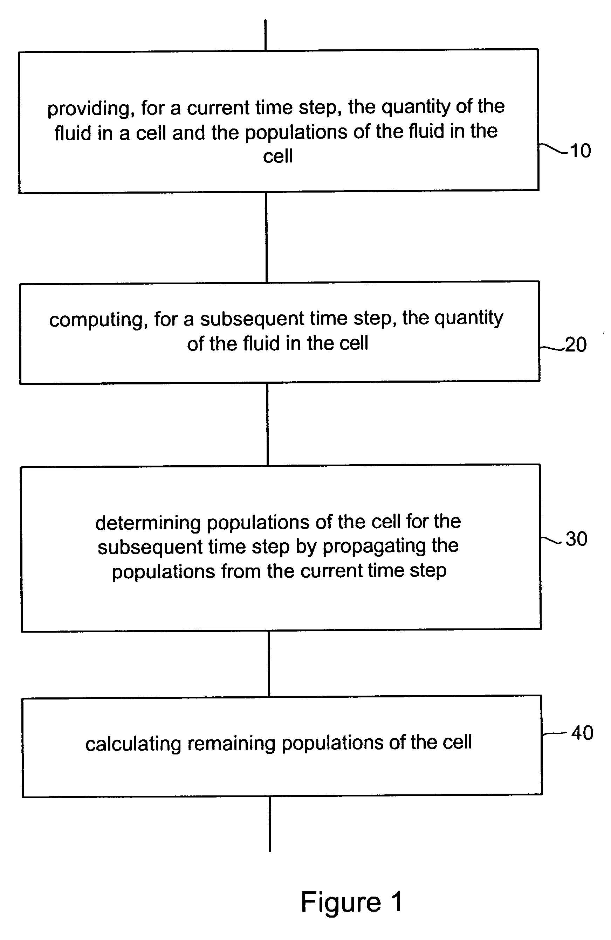

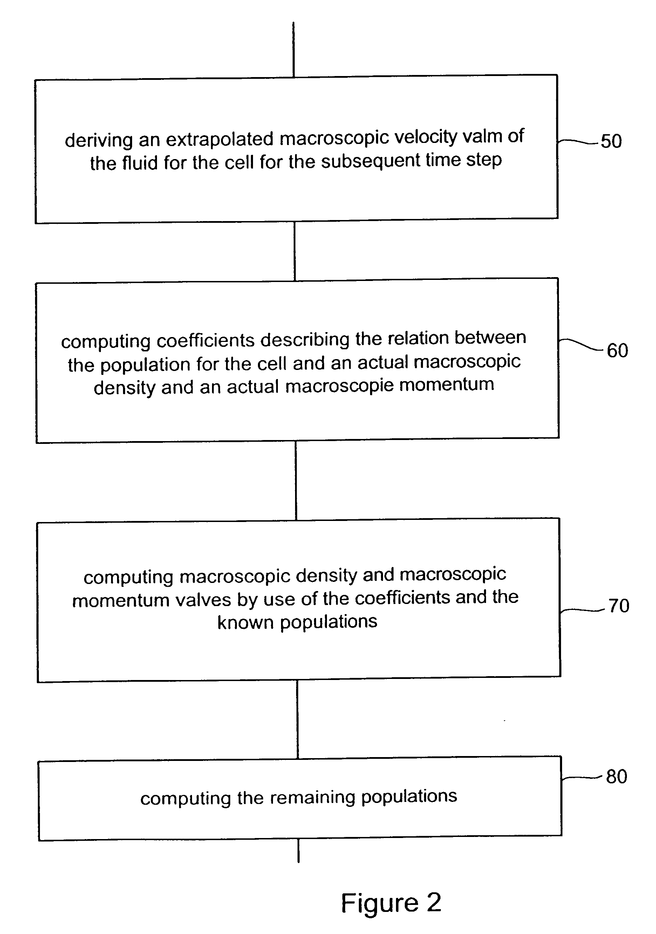

Figures 1 and 2 show the steps which are performed for computing an interface of a fluid in a space for a next time step based on simulation data known from a previous time step, according to an embodiment of the present invention.

The known data from a previous time step, the computation of the steps of Figure 1 and 2 is based on, is defined with respect to a regular grid which spans the space of interest and is composed of regularly arranged cells. In the easiest case, the cells are squares, in 2D, and cubes, in 3D, respectively. The data the computation for the next time step is based on comprises for each cell of the grid or a portion thereof, a quantity value and population values. The quantity value lies between zero and the quantity of fluid present in the cell and is based on a computation from populations of a previous time step. A population value corresponds to the quantity of fluid in the cell that moves in one of a predetermined set of directions. The predetermined set of directions comprises, for example, the zero vector and, in the case of 2D, the directions leading from a center of a square to the corners and the medians of the square and, in the case of 3D, the directions leading from the center of a cube to the corners and face-centers of the cube. Thus, the number of populations would be 9 in 2D and 15 in 3D. The sum of all populations yields the density in the cell. The quantity in the cell that lies between 0 and the density in the cell and the populations form main independent variables with respect to the computation to be described with regard to Figures 1 and 2.

The microscopic populations in each cell are related to macroscopic values. As mentioned above, the macroscopic density is equal to the sum of the populations. A macroscopic momentum of the fluid at the position of the cell can be defined as the sum of products of each population and its corresponding velocity vector of the predefined set of velocity vectors, wherein the macroscopic velocity is the macroscopic momentum devided by the macroscopic density. Therefore, a relation between macroscopic values of the fluid, such as the macroscopic density and the macroscopic momentum, and the microscopic populations at the cell exists.

In order to be able to compute the population distribution in a cell for a subsequent time step based on data of a previous time step, it is necessary to have an equation that describes the relation between populations on the one hand and time and space on the other hand, i.e. a population solution in the microscopic domain, that concurrently fulfils the flow equations such as the Navier Stokes equation in the macroscopic domain. In the specific embodiment described in the following, this population solution is described by the Lattice Boltzmann equation but it could be any equation that is able to derive the populations of the subsequent step from the populations of a previous step under observation of the macroscopic flow conditions.

An advantage that arises from defining the fluid flow by microscopic populations is that, due to the limited number of velocity vectors, the population solution is a relation between populations of a few neighboring cells. This locality of the population solution helps to deal with high dimensions of flow problems.

For bulk cells, i.e. cells which are in each direction of the predetermined set of directions surrounded by cells with known populations, the computation of population distribution for the subsequent time step can be readily performed by use of the population solution since all populations of the previous time step required are known. A problem arises in interface cells, i.e. cells which obtain some quantity of fluid, and which are not completely surrounded by cells having known populations, or cells having at least one cell adjacent thereto that has an unknown population moving in the respective direction. Since the population of at least one velocity direction entering the cell is unknown, the population solution cannot be solved. Due to this reason, the steps shown in Figures 1 and 2 are performed on the interface cells in order to "reconstruct" unknown populations at the interface cells.

As will be described in the following, the reconstruction is performed by use of a relation between the microscopic populations on the one hand and the macroscopic values such as the macroscopic density, the macroscopic momentum and the macroscopic velocity on the other hand. By means of this relation, the higher dimensional space of populations is mapped into the lower dimensional space of macroscopic values. Thus, known populations of an interface cell can be used to derive the otherwise unknown macroscopic values. The derived macroscopic values can be used to compute the microscopic populations based on the relation between the microscopic populations and macroscopic values as will be decribed hereinafter. In the specific embodiment described below, the relation between microscopic populations and macroscopic values is described by an Chapman-Enskog expansion for developing the population solution around an equilibrium condition.

In the following, the reconstruction of unknown populations of an particular interface cell is described with regard to Figures 1 and 2.

In step 10, the quantity of the fluid in the interface cell and the populations of the fluid in the interface cell are provided for a current time step. In case of the beginning of a computation or simulation of a numerical modeling of a moving free interface, step 10 could involve the initialization of the quantity of fluid in each cell of the grid in which the fluid is at the beginning of the simulation as well as the initialization of macroscopic values such as an inlet density (pressure) and velocity based upon which initial microscopic populations for the cells can be determined, on which, in turn, a collision is performed, i.e. solving the population solution by use of these populations. Otherwise, step 10 represents merely providing the quantity and the populations of the fluid in the interface cell from the result of the previous time step.

In step 20, the quantity of the fluid in the interface cell for the subsequent time step is computed. The computation is based on the known post-collision populations of the fluid in the surrounding cells from the current time step which are associated with directions directed into the cell, i.e. incoming populations emanating from cells at least partially filled with fluid. This computation can be performed by accumulating all known populations which carry some quantity of fluid and emanate from surrounding cells in directions into the interface cell. Boundary conditions can be accounted for by conventional measures. Furthermore, some constraints such as mass-conservation may be taken into consideration when computing the quantity of the following time step. These constraints determine the quantity of fluid a population imports into the cell.

In step 30, as much of the populations of the interface cell, having obtained at least some fluid, for the subsequent time step as possible are determined by propagating the population from the surrounding cells from the current time step. This means that similar to step 20, the known populations of surrounding cells which are directed or which are moving to the interface cell are moved to or entered into the interface cell. After step 30 the interface cell comprises at least one known population and at least one unknown population.

In step 40, the remaining unknown populations of the cell are calculated or "reconstructed". The steps for performing this reconstruction of the unknown populations of the interface cell are shown in Figure 2. In step 50, an extrapolated macroscopic velocity value and, if necessary, an extrapolated macroscopic density value of the fluid for the cell for the subsequent time step are derived by extrapolation. These extrapolated macroscopic values are used to linearize non-linear terms in the underlying equation describing the relation between the microscopic populations on the one hand and the actual macroscopic values on the other hand. As a result, a linearized system is obtained. The extrapolated macroscopic values can be derived by an extrapolation in time or space or some combination thereof. An extrapolation in time means extrapolating the history of macroscopic values of the interface cell at foregoing time steps by, for example, determining a polynomial or spline fit with respect to the macroscopic values of foregoing time steps. Similarly, an extrapolation in space involves, for example, the determination of a polynomial or spline fit to macroscopic values of surrounding cells. Possible surrounding cells for providing macroscopic values for determining the fit are the surrounding bulk cells for which the collision has been performed without problems because they have known populations exclusively. Additionally, those interface cells may be used for extrapolation the unknown populations of which had been reconstructed before. Thus, for each interface cell, at least one adjacent cell exists where a macroscopic value for determining the fit is available. The extrapolation in space, of course, can be extended to macroscopic values being spaced apart from the interface cell and the number of cells surrounding the interface cell. The fit itself can be performed in least-square sense or by use of single value decomposition method.

In step 60, coefficients describing the relation between the population for the cell and the actual macroscopic values in linearized form are computed. The underlying equation describing the relation between the populations and the actual macroscopic values is a result of a development of the population solution around an equilibrium condition and is linearized by the extrapolated macroscopic values from step 50. In the case of using the Lattice-Boltzmann equation for the population solution, for example, the coefficients describing the relation between the microscopic populations and the macroscopic values are related to the Chapman-Enskog expansion. The equilibrium condition around which the population solution is developed corresponds to the population distribution that occurs when the system of fluid is left to itself or no external forces and no boundary collision is applied to the fluid. In the specific embodiment described in the following, the first order Chapman-Enskog expansion is used for developing the Lattice-Boltzmann equation around the equilibrium solution.

After having computed the coefficients describing the relation between the microscopic populations for the interface cell and the actual macroscopic values, in step 70, macroscopic (approximated) values to be used for reconstruction are computed by use of the coefficients computed in step 60 and the known populations determined in step 30 by propagating the populations from surrounding cells from the current time step. These quantities are used only for construction of known populations and are then updated. As mentioned before, the number of unknown macroscopic values is less than the number of populations and the number of velocity directions, respectively. Thus, although some of the populations remain unknown after step 30, it is very likely that there are enough known populations for solving the linearized relation between populations and macroscopic values. In specific embodiments described hereinafter, the linearized system is solved by using a fast least-square method with permutations or a single value decomposition method, but it can also be solved in other ways. If, nevertheless, the number of known populations is insufficient, what does not occur often, then unknown populations are extrapolated from populations of neighboring cells, i.e. in space, or in time. The extrapolation can be performed as described with regard to the extrapolation of the microscopic values in step 50.

By use of the computed macroscopic values and the coefficients, the remaining unknown populations of the interface cell are computed in step 80 whereinafter all populations of the interface cell, and thus all macroscopic values are known. After that, the collision is performed in the cell.

With regard to Figures 1 and 2, it is noted that the procedure shown therein can be implemented in hardware, firmware or software. An apparatus for performing the computation of the interface of a fluid in a space could be composed of means for performing the respective steps shown in Figures 1 and 2. Furthermore, it is noted that although the foregoing description was related to the reconstruction of unknown populations of only one interface cell, it is easily understood that the respective steps can be embedded in a loop scanning all interface cells, i.e. cells where the quantity of fluid is non-zero, and where at least one population is unknown due to the fact that in one of the surrounding cells the populations are unknown. In each subsequent computation procedure regarding a next interface cell, the result of the forgoing computation of a previous interface cell max be used for the aforementioned extrapolations.

Furthermore, it is noted that although the foregoing description is related to an interface cell in which the quantity of fluid has already been non-zero in the current time step, the steps of figures 1 and 2 apply, with just a little variation, also to a new interface cell, where the quantity of fluid has been zero in the current time step, i.e. was not occupied in the current time step. In case of a new interface cell, in step 10, the quantity of the fluid in cells surrounding the new interface cell and the populations of same are provided. Based on this information, the quantity of fluid in the new interface cell for a subsequent time step is computed in step 20. Similar, steps 30 to 80 apply also to new interface cells.

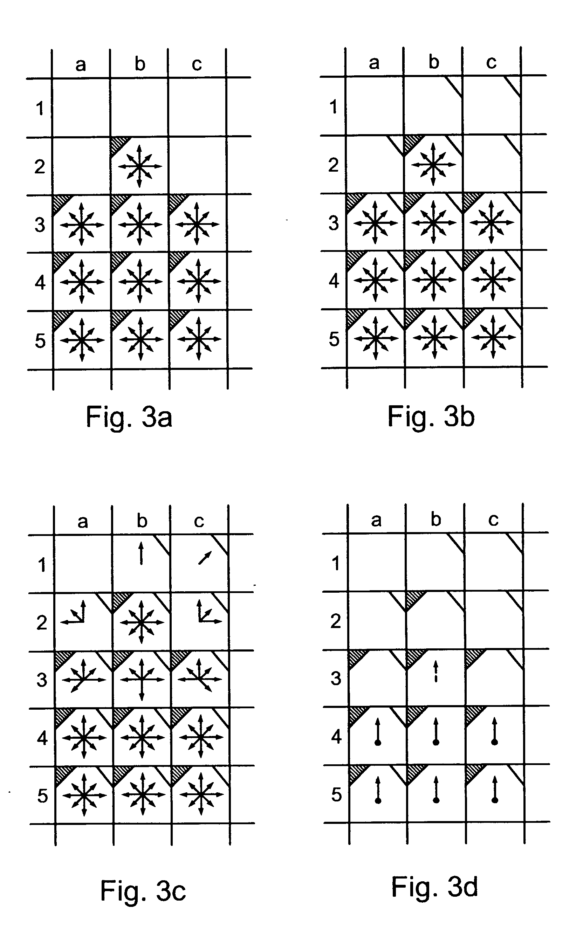

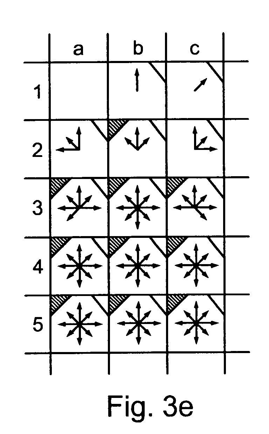

With regard to Figures 3a to 3e, the steps of Figures 1 and 2 are explained with respect to an exemplary portion of the grid comprising 3 x 5, i.e. 15, cells. In all figures, the cells are referred to by indicating the column and the row in which the respective cell is. The three columns shown are alphanumericly numbered by a, b, c from the left to the right. The five rows shown are numbered 1, 2, 3, 4 and 5 from the top to the bottom. In Figures 3a, 3b, 3c and 3e, in each cell the presently known or determined populations are indicated by arrows, the arrows having a length corresponding to the population value and each arrow being directed to one of a predetermined set of directions. More particularly, in each cell where fluid is present, eight arrows are provided at maximum, four of which being directed from the center to the corners of the cell, and the other four being directed from the center to the medians of the cell. Each arrow corresponds to one of the populations or its momentum in a cell wherein the population corresponding to a zero momentum or vector is not shown. A bold marked corner of a cell indicates that this cell has a quantity of fluid greater than 0. From now on these cells are called active cells.

Figure 3a shows the information status at the beginning of a time step for which the quantity and populations for the cells are to be calculated, i.e. the result of a current time step is shown. As can be seen, cells in rows 3, 4 and 5 and cell 2b are active, i.e. their quantities are greater than zero. This means that all their populations are known by construction of the algorithm. Figure 3b shows the available data after the quantity of fluid in each cell for the subsequent time step has been determined (compare to step 20 of figure 1). Each cell for which the obtained quantity of the subsequent time step is greater than zero, and which, thus, is active in the subsequent time step, is indicated by a contoured triangle in the right top corners. As can be seen, all cells of the grid portion shown, except cell 1a, have obtained quantity of fluid of surrounding cells and are active in the subsequent time step. Cell 1a is an example for a cell onto which a population is directed, but which obtains no quantity of fluid. This is because the determination of fluid in the cells for the subsequent time step fulfills some constraints such as tending to send as much as possible fluid back to the bulk in order to achieve a sharp front. This means, although a population of cell 2b is directed into the direction of cell 1a, cell 1a is not activated because it obtained no quantity of fluid from cell 2b due to, for example, recoloring solution as described in Eq. (38). Figure 3c shows the available data after propagating the known populations from active cells of the current time step to active cells of the subsequent time step. This means moving quantity of the fluid and each population from its current cell to an adjacent cell positioned in direction of movement of the population. As can be seen, cells in rows 4 and 5 have obtained exclusively known populations from surrounding cells so that the information available for these cells is sufficient in order to solve the population solution, or to perform a collision on these cells. The cells in row 3 and the cell 2b are interface cells or I-cells which have been active in the current time step, and which are active in the subsequent time step, but which lack at least one known population, or have obtained at least one unknown population. Cells 2a, 2c and the cells in row 1 are new interface cells or N-cells which are active in the subsequent time step but have not been active in the current time step.

As mentioned before, the population solution can be solved without problems for all bulk cells or B-cells. They are determined before collision and stay the same after collision. Macroscopic values such as the macroscopic velocity can be determined then. The macroscopic velocities, thus determined, are shown in Figure 3d as continuous arrows pointing from the center of these cells into the direction of the macroscopic velocity, the length of these arrows corresponding to the magnitude of the macroscopic velocity. Based on a portion of these macroscopic velocities, an extrapolated macroscopic velocity can be determined for the cell 3b. Such an extrapolated macroscopic velocity is shown in figure 3d by a dotted arrow. Based on this extrapolated macroscopic velocity, the relation between the microscopic populations and the macroscopic values derived by developing the population solution around an equilibrium condition can be linearized. If necessary, an extrapolation is performed also with respect to macroscopic density. Based on the linearized relation, the unknown populations of cell 3b are determined. The result is shown in Figure 3e, in which dotted arrows correspond to the reconstructed unknown populations. As can be seen from figure 3e, all populations of cell 3b are now available for performing collision and computing the macroscopic values for cell 3b. The macroscopic values being obtained from the known and reconstructed populations might be used to iteratively repeat the extrapolations mentioned above, and to solve the linearized system based on the newly extrapolated macroscopic values.

As it becomes clear from the above, the reconstructed populations together with the known populations of cell 3b can be used to determine a further macroscopic velocity in addition to those shown in Figure 3d with continuous lines. Thus, the reconstruction of cell 3b can serve as a basis for the reconstruction of unknown populations of the remaining interface cells 3e and 3c and those in rows 1 and 2. Thus, performing the above described measures on all interface cells yields in a state similar to that shown in Figure 3a where for all active cells all populations are known.

In the following, a specific embodiment of the present invention is described with regard to underlining the mathematical framework.

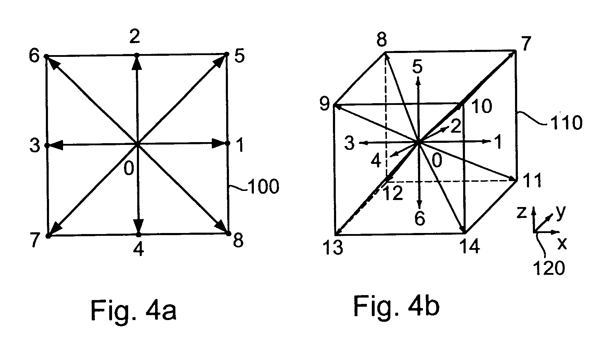

In the specific embodiment of the present invention described below, the momentums and velocities of the populations are directed in directions of a predetermined set of directions. The numeration and orientation of the velocities $\vec{C}_i$, the momentums $\vec{j}$, and the numeration of the populations $N_i$, respectively, is shown in figure 4a and 4b.

Figure 4a illustrates the numeration and orientations or directions of the velocities $\vec{C}_i$ and momentums $\vec{j}_i$ of the populations $N_i$ in case of 2D, wherein these numbering and orientation definitions are referred to as D2Q9 model in the following description. Figure 4a shows an square 100 which corresponds to an cell of the aforementioned grid in 2D case, and eight arrows numbered 1 to 8 and emanating from the center of the square to the corners and the face-centers or medians of the square 100, each arrow corresponding to a velocity vector $\vec{C}_i$. In particular, arrows 1 to 4 point from the center to the face-centers, and arrows 5 to 8 point from the center to the corners of the square 100. Accordingly, populations with an index between 1 to 4 are moving in horizontal or vertical directions, and populations with an index between 5 to 8 are moving diagonally. As indicated by 0, the velocity $\vec{C}_0$ corresponds to the zero vector. Thus, nine directions and corresponding populations exists in D2Q9 model in total.

Similarly, Figure 4b illustrates the numeration and orientations or directions of the velocities $\vec{C}_i$ and momentums $\vec{j}$ of the populations $N_i$ in case of 3D, wherein these numbering and orientation definitions are referred to as D3Q15 in the following description. Figure 4b shows an cube 110 which corresponds to a cell of the aforementioned grid in 3D case, and fourteen arrows numbered 1 to 14 and emanating from the center of the cube 110 to the corners and the face-centers or medians of the cube 110, each arrow corresponding to a velocity vector $\vec{C}_i$. In particular, arrows 1 to 6 point from the center to the face-centers, and arrows 7 to 14 point from the center to the corners of the cube 110. Accordingly, populations having an index between 1 to 6 are moving in x-, y- and z-direction, as indicated by coordinate axes 120, and populations having an index between 7 to 14 are moving diagonally. As indicated by 0, the velocity $\vec{C}_0$ corresponds to the zero vector. Thus, fifteen directions and corresponding populations exists in D3Q15 model in total.

The populations or microscopic populations $N_i$ are related to macroscopic momentum $\vec{j}$, macroscopic density $\rho$ and macroscopic velocity $\vec{u}$ by the following equations:

$$\rho\left(\vec{r},\ t\right) = \sum_{i=0}^{b_m} N_i\left(\vec{r},\ t\right) \tag{1}$$

$$\vec{j}\left(\vec{r},t\right)= \vec{J}+\frac{1}{2}\vec{F}, \quad \vec{J} = \sum_{i=1}^{b_m} N_i\left(\vec{r},t\right)\vec{C}_i. \tag{2}$$

$$\vec{u} = \frac{\vec{J}}{\rho}, \vec{J} = \vec{j} - \frac{1}{2}\vec{F}. \tag{3}$$

in which $\vec{r}$ is the position, t is time, $b_m$ indicates the number of directions in the corresponding model minus one, and $\vec{F}$ is external force.

After having discussed the variables most important for a further understanding, the mathematical equations underlying the specific embodiments are described in the following.

The relation between populations $N_i$ on the one hand and time and space on the other hand is described by the Lattice Boltzmann equation which relates populations $N_i$ of one time step during a simulation with populations of a previous or subsequent time step, with concurrently fulfilling the Navier-Stokes equation in the macroscopic domain.

The Lattice Boltzmann equation is used in a form

$$\tilde{N}_i\left(\vec{r},t\right) = N_i\left(\vec{r},t\right) + \sum_{j=0}^{b_m} A_{ij}\left(N_j\left(\vec{r},t\right) - N_j^{eq\cdot}\left(\vec{r},t\right)\right) + t_p^{*}\left(\vec{C}_i,\vec{F}\right)$$

$$N_i\left(\vec{r} + \vec{C}_i, t+1\right) = \tilde{N}_i\left(\vec{r},t\right) \qquad i \in \{0,\ldots,b_m\}, \tag{4}$$

where D is the Dimension, $N_i$ is the population moving with D-dimensional velocity $\vec{C}_i$, $\vec{N}^{eq\cdot}$ is the population corresponding to velocity $\vec{C}_i$ in equilibrium condition, $b_m$ indicates the number of directions in the corresponding model minus one, i.e. 8 or 14, A is a collision matrix, $\vec{F}$ is an external force, t is the time or the time step, $\vec{r}$ is the location, $p = \left\|\vec{C}_i\right\|^2$ and $t_p^{*}$ is a model parameter the values for which are listed in Table 1.

Table 1

| Model | $t_0^{*}$ | $t_1^{*}$ | $t_{\sqrt{2}}^{*}$ | $t_{\sqrt{3}}^{*}$ |
|---|---|---|---|---|
| D2Q9 | $\dfrac{3 - 5c_s^2}{3c_s^2}$ | $\dfrac{1}{3}$ | $\dfrac{1}{12}$ | - |
| D3Q15 | $\dfrac{3 - 7c_s^2}{3c_s^2}$ | $\dfrac{1}{3}$ | - | $\dfrac{1}{24}$ |

A short discussion on modified momentum definition because of force term is found in the description below with regard to the boundary conditions.

Conservation of $\rho$ and $\vec{J}$ imposes the following conditions on the collision matrix A:

$$A \cdot \vec{1} = A \cdot \vec{C}_\alpha = 0, \qquad \forall \alpha = 1, ..., D. \tag{5}$$

where $\vec{1} = \{1, ..., 1\}$, and the $(b_m + 1)$-vector $\vec{C}_\alpha$ is built from the components of the $(b_m + 1)$ population velocities in direction $\alpha$.

The collision matrix A is fully determined by the choice of its non-zero eigenvalues and the corresponding eigenvectors. To satisfy the linear stability conditions its eigenvalues should be in the interval $]-2,0[$. Let $\{\vec{e}_k\}$, k= 0,..., $b_m$ be the orthonormal basis in momentum space, constructed in a form of the polynomials of the vectors $\vec{C}_\alpha$. Assume that this basis represents the set of the eigenvectors of the matrix A, associated with the eigenvalues $\{\lambda_k\}$. Based on this, Eq. (4) can be written in a form of projection on the basis vectors:

$$\tilde{N}_i\left(\vec{r},t\right) = N_i\left(\vec{r},t\right) + \sum_{k=0}^{b_m} \lambda_k \left(\vec{N} - \vec{N}^{eq\cdot}, \vec{e}_k\right)_{ki} + t_p^*\left(\vec{C}_i,\vec{F}\right)$$

$$N_i\left(\vec{r} + \vec{C}_i, t+1\right) = \tilde{N}_i\left(\vec{r},t\right) \qquad i \in \{0,\ldots,b_m\}, \qquad (6)$$

Note, that Eq. (6) does not need to build the collision matrix A itself. The eigenvalues can be then easily changed during the computations, if necessary.

The first step or equation in Eq. (6) corresponds to the collision step that has been described with respect to figures 1, 2 and 3c and that will be described in more detail with regard to the specific embodiment below, and the second step corresponds to the propagation step described with respect to step 30 in figure 1 and figure 3b.

Mass vector $\vec{1}$ and the vectors $\vec{C}_\alpha$ are the eigenvectors associated with the zero eigenvalues. When all non-zero eigenvalues are the same and equal to $-1/\tau$, the LB Eq. (6) reduces to

$$N_i\left(\vec{r} + \vec{C}_i, t+1\right) = N_i\left(\vec{r},t\right) - \frac{1}{\tau}\left(N_i - N_i^{eq\cdot}\right) + t_p^*\left(\vec{C}_i,\vec{F}\right) \qquad (7)$$

In the case of the collision (7), $\rho$ and $\vec{J}$ are conserved provided that the following conditions on the equilibrium function meet:

$$\left(\vec{N} - \vec{N}^{eq\cdot}, \vec{1}\right) = 0, \qquad \left(\vec{N} - \vec{N}^{eq\cdot}, \vec{C}_\alpha\right) = 0, \qquad \forall \alpha = 1,\ldots D. \qquad (8)$$

After having discussed the Lattice Boltzmann equations used to describe the microscopic relations between the populations of consecutive time steps and neighboring populations, the following section focus on the macroscopic relations and their relation to the microscopic variables. A relation between the microscopic values and the macroscopic values will be derived from a Chapman-Enskog expansion by developing the population solution around an equilibrium distribution. This relation is used later to reconstruct the unknown populations of interface cells.

First, the population solution around the equilibrium is developed in a form of a Chapman-Enskog expansion, in powers of small perturbation parameter $\varepsilon = 1/L$:

$$N_i\left(\vec{r},t\right) = N_i^{eq\cdot}\left(\vec{r},t\right) + \varepsilon N_i^{(1)}\left(\vec{r},t\right) + \varepsilon^2 N_i^{(2)}\left(\vec{r},t\right) + O\left(\varepsilon^3\right), \qquad i = 0,\ldots,b_m. \qquad (9)$$

In order to derive Navier-Stokes equations for $\rho$ and $\vec{j}$, equilibrium solution $N_i^{eq\cdot}(\vec{r}.t)$ can take the form

$$N_i^{eq\cdot} = t_p^*\left[c_s^2\rho + J_\alpha C_{i\alpha} + \rho\frac{u_\alpha u_\beta}{2}\left(3C_{i\alpha}C_{i\beta} - \delta_{\alpha\beta}\right)\right], \quad \vec{u} = \frac{\vec{j}}{\rho}, \quad \vec{J} = \vec{j} - \frac{1}{2}\vec{F}. \qquad (10)$$

where $c_s^2$ is the squared sound velocity, index $p$ is equal to $\left\|\vec{C}_i\right\|^2 = c_i^2$, $t_p^*$ is as defined in table 1, $\delta$ is Dirac function, $\vec{C}_{i\alpha}$ is the $\alpha$-th component microscopic velocity $\vec{C}_i$, $u_\alpha$ is the $\alpha$-th component of macroscopic velocity $\vec{u}$ and, by convention also applying for the following equations, the equation is summed with respect to indices $\alpha$ and $\beta$ over 1 to D.

Starting from the Chapman-Enskog expansion (9), same leads to $\varepsilon^1$-accurate macroscopic relations:

$$\partial_{t_1}\rho + \nabla'\cdot j_\alpha = 0, \; \partial_t = \varepsilon\partial_{t_1} + \varepsilon^2\partial_{t_2}, \; d_\chi = \varepsilon d_\chi,$$

$$\partial_{t_1} j_\alpha + \partial_\beta, P_{\alpha\beta} = 0, \; P_{\alpha\beta} = c_s^2\rho\delta_{\alpha\beta} + \rho u_\alpha u_\beta. \tag{11}$$

Where indices $\partial_{t_1}$ und $\partial_{t_2}$ denote derivatives withrespect to new time variables $t_1$ and $t_2$.

Correction $N_i^{(1)}$ satisfies first order Taylor development of the Eq. (6):

$$\partial_{t_1} N_i^{eq.} + C_{i\alpha}\partial_{\alpha'} N_i^{eq.} = \sum_{j=0}^{b_m} A_{ij} N_j^{(1)}, \qquad i \in \{0, \ldots b_m\}. \tag{12}$$

Substitution of the relation (9) into (12) yields with help of the relations (11), and when $O(u^2)$ and $O(\varepsilon^2)$ terms are neglected:

$$\partial_{t_1} N_i^{eq.} + C_{i\alpha}\partial_\alpha. N_i^{eq.} = C_{i\alpha}t_p^\bullet \overbrace{\left[\partial_{t_1} j_\alpha + c_s^2\partial_{\alpha'}\rho\right]}^{=0} + c_s^2 t_p^\bullet \partial_{t_1}\rho + t_p^\bullet \frac{\partial j_\alpha}{\partial\beta'} C_{i\alpha}C_{i\beta} =$$

$$t_p^\bullet\left(\frac{c_i^2}{D} - c_s^2\right)\nabla'\cdot\vec{j} + t_p^\bullet \frac{\partial j_\alpha}{\partial\beta'}\left(C_{i\alpha}C_{i\beta} - \frac{c_i^2}{D}\delta_{\alpha\beta}\right). \tag{13}$$

As a result, first order correction to equilibrium $N_i^{eq.}(\vec{r},t)$ can be derived as

$$\varepsilon N_i^{(1)} = \frac{1}{\lambda_\psi} \frac{\partial j_\alpha}{\partial\beta} Q_{i\alpha\beta} + \frac{1}{\lambda_e} \nabla\cdot\vec{j}E_i^{im}. \tag{14}$$

where $Q_{i\alpha\beta}$ and $E_i^{im}$ are eigenvectors of the collision matrix A:

$$Q_{i\alpha\beta} = t_p^\bullet\left(C_{i\alpha}C_{i\beta} - \frac{c_i^2}{D}\delta_{\alpha\beta}\right), \tag{15}$$

$$E_i^{im} = t_p^\bullet\left(\frac{c_i^2}{D} - c_s^2\right). \tag{16}$$

As can be seen from Eq. (9), (10) and (14), the first order Chapman-Enskog expansion is non-linear due to the term $\rho u_\alpha u_\beta$ in $N_i^{eq.}(\vec{r},t)$. As a result, extrapolated macroscopic values are required in order to linearize this term, as it will be described in more detail in the following with regard to figure.

Before focusing on the macroscopic relations as obtained from the first order expansion, the basis vectors and associated eigenvectors of the collision matrix A for the D2Q9 and D3Q15 models will be given in the following.

Orthonormal basis vectors for the D2Q9 model can be chosen in the form

$$\vec{e}_1 = \frac{1}{3}\left\{C_i^0\right\}, \qquad\qquad \vec{e}_2 = \frac{1}{\sqrt{6}}\left\{C_{ix}\right\},$$

$$\vec{e}_3 = \frac{1}{\sqrt{6}}\left\{C_{iy}\right\}, \qquad\qquad \vec{e}_4 = 6\left\{t_p^{\bullet}C_{ix}C_{iy}\right\},$$

$$\vec{e}_5 = 3\left\{t_p^{\bullet}\left(C_{ix}^2 - \frac{1}{2}c_i^2\right)\right\}, \qquad\qquad \vec{e}_6 = \sqrt{3}\left\{t_p^{\bullet}\left(C_{ix}^3 - 3C_{ix}C_{iy}^2\right)\right\},$$

$$\vec{e}_7 = \sqrt{3}\left\{t_p^{\bullet}\left(C_{iy}^3 - 3C_{iy}C_{iy}^2\right)\right\},$$

$$\vec{e}_8 = \left\{t_p^{\bullet}\left(\frac{c_i^2}{D} - c_s^2\right)\right\} / \left\|\vec{e}_8\right\|, \ \left\|\vec{e}_8\right\| = \frac{3}{\sqrt{2}} \ if \ c_s^2 = \frac{1}{3},$$

$$\vec{e}_9 = \left\{T_{ip}\right\} / \left\|\vec{T}_P\right\|. \qquad\qquad\qquad\qquad\qquad (17)$$

where $c_s^2$ is the squared sound velocity, D is the dimension, and $C_{ix}$ and $C_{ix}$ are the components of the 2D velocity $\vec{C}_i$.

Last vector $\vec{e}_9$ has constant value $T_p$ for each $p$-class, i.e. for all i for which $\left\|\vec{C}_i\right\|^2 = p$.

For D2Q9 Model and when $c_s^2 \neq 1/3$, one can take:

$$T_0 = 1, \quad T_1 = \frac{13 - 21c_s^2}{4\left(1 - 3c_s^2\right)}, \quad T_2 = \frac{-14 + 24c_s^2}{4\left(1 - 3c_s^2\right)};$$

otherwise $T_0 = 0$, $T_1 = 1$, $T_2 = -1$.

Alternatively to the basis vectors $\vec{e}_8$ and $\vec{e}_9$ of (17), two alternative, $c_s^2$-independent, basis vectors are referred to as $\vec{E}$ and $\vec{H}$ :

$$E_i = \left\{3C_i^2 - 4\right\}, \qquad\qquad H_i = \left\{9C_{ix}^2 C_{iy}^2 - 6C_i^2 + 4\right\},$$

$$\vec{e}_8 = \frac{3\sqrt{2}}{2}\left(E_i - H_i\right), \qquad\qquad \vec{e}_9 = -\frac{3\sqrt{2}}{2}\left(H_i + E_i\right), \ if \ c_s^2 = \frac{1}{3}. \qquad (18)$$

The eigenvalues associated with basis vectors (17) are

$$\{0,0,0, \lambda_\Psi^{\alpha\beta}, \lambda_\Psi^{\alpha\alpha}, \lambda_2, \lambda_2, \lambda_e, \lambda_{last}\} \qquad\qquad (19)$$

Vectors $\vec{e}_4$-$\vec{e}_9$ conserve the mass and the momentum. In case $\lambda_\Psi^{\alpha\beta} = \lambda_\Psi^{\alpha\alpha}$, projection of first order population expansion (10), (14) on the basis (17) yields the coefficients of the decomposition as (see first and second terms, respectively, for $N_i^{eq.}$ and $N_i^{(1)}$):

$$\left(\vec{N}, \vec{e}_1\right) = c_s^2 \rho$$

$$\left(\vec{N}, \vec{e}_2\right) = \frac{J_x}{\sqrt{6}}$$

$$\left(\vec{N}, \vec{e}_3\right) = \frac{J_y}{\sqrt{6}}$$

$$\left(\vec{N}, \vec{e}_4\right) = \frac{j_x j_y}{2\rho} \qquad + \frac{1}{6}\frac{1}{\lambda_\psi}\left(\frac{\partial j_x}{\partial y} + \frac{\partial j_y}{\partial x}\right)$$

$$\left(\vec{N}, \vec{e}_5\right) = \frac{1}{2\rho}\left(j_x^2 - j_y^2\right) \qquad + \frac{1}{3\lambda_\psi}\left(\frac{\partial j_x}{\partial x} - \frac{\partial j_y}{\partial y}\right)$$

$$\left(\vec{N}, \vec{e}_6\right) = \frac{\sqrt{3}J_x}{6} \qquad +$$

$$\left(\vec{N}, \vec{e}_7\right) = \frac{\sqrt{3}J_y}{6} \qquad +$$

$$\left(\vec{N}, \vec{e}_8\right) = -c_s^2\frac{3\rho}{2\sqrt{2}} + \frac{\left(j_x^2 + j_y^2\right)}{\sqrt{2}\rho} \qquad + \frac{\sqrt{2}}{3}\frac{1}{\lambda_e}\left(\frac{\partial j_x}{\partial x} + \frac{\partial j_y}{\partial y}\right), \quad c_s^2 = 1/3.$$

$$\left(\vec{N}, \vec{e}_9\right) = c_s^2\frac{\rho}{2\sqrt{2}}, \quad c_s^2 = 1/3. \tag{20}$$

For the D3Q15 Model, the orthonormal vectors are chosen in the form

$$\vec{e}_1 = \frac{1}{\sqrt{15}}\left\{C_i^0\right\}, \qquad \vec{e}_2 = \frac{1}{\sqrt{10}}\left\{C_{ix}\right\},$$

$$\vec{e}_3 = \frac{1}{\sqrt{10}}\left\{C_{iy}\right\}, \qquad \vec{e}_4 = \frac{1}{\sqrt{10}}\left\{C_{iz}\right\},$$

$$\vec{e}_5 = 6\sqrt{2}\left\{t_p^* C_{ix}C_{iy}\right\}, \qquad \vec{e}_6 = 6\sqrt{2}\left\{t_p^* C_{iy}C_{iz}\right\},$$

$$\vec{e}_7 = 6\sqrt{2}\left\{t_p^* C_{ix}C_{iz}\right\}, \qquad \vec{e}_8 = \frac{9}{2\sqrt{3}}\left\{t_p^*\left(C_{ix}^2 - \frac{1}{D}c_i^2\right)\right\},$$

$$\vec{e}_9 \;=\; \frac{3}{2}\left\{t_p^{\bullet}\left(C_{iy}^2 - C_{iz}^2\right)\right\}, \qquad\qquad \vec{e}_{10} \;=\; \frac{1}{\sqrt{8}}\left\{t_p^{\bullet}C_{ix}C_{iy}C_{iz}\right\},$$

$$\vec{e}_{11} \;=\; \frac{3}{\sqrt{10}}\left\{t_p^{\bullet}\left(2C_{ix}^3 - 3C_{ix}\left(C_{iy}^2 + C_{iz}^2\right)\right)\right\},$$

$$\vec{e}_{12} \;=\; \frac{3}{\sqrt{10}}\left\{t_p^{\bullet}\left(2C_{iy}^3 - 3C_{iy}\left(C_{ix}^2 + C_{iz}^2\right)\right)\right\},$$

$$\vec{e}_{13} \;=\; \frac{3}{\sqrt{10}}\left\{t_p^{\bullet}\left(2C_{iz}^3 - 3C_{iz}\left(C_{ix}^2 + C_{iy}^2\right)\right)\right\},$$

$$\vec{e}_{14} \;=\; \left\{t_p^{\bullet}\left(\frac{C_i^2}{D} - c_s^2\right)\right\} / \left\|\vec{e}_{14}\right\|, \qquad \left\|\vec{e}_{14}\right\| = 3\sqrt{2} \qquad if \;\; c_s^2 = \frac{1}{3},$$

$$\vec{e}_{15} = \left\{T_p\right\} / \left\|\vec{T}_p\right\|. \qquad\qquad\qquad\qquad (21)$$

where $c_s^2$ is the squared sound velocity, D is the dimension, and $C_{ix}$ and $C_{ix}$ are the components of the velocity $\vec{C}_i$.

When $c_s^2 \neq 5/21$, $T_0 = 1$,

$$T_1 = \frac{75 - 171c_s^2}{6\left(5 - 21c_s^2\right)}, \quad T_2 = \frac{-80 + 192c_s^2}{8\left(5 - 21c_s^2\right)} \;;$$

otherwise $T_0 = 0$, $T_1 = 1$, $T_2 = -3/4$.

Here again, the constant multiple before the lattice vector corresponds to inverse of the norm of this vector. Note, that vectors $\vec{e}_5$-$\vec{e}_{15}$ conserve mass and momentum. The basis vectors of (21) are associated with the following eigenvalues

$$\{0, 0, 0, 0, \lambda_\Psi^{\alpha\beta}, \lambda_\Psi^{\alpha\beta}, \lambda_\Psi^{\alpha\beta}, \lambda_\Psi^{\alpha\alpha}, \lambda_\Psi^{\alpha\alpha}, \lambda_{xyz}, \lambda_2, \lambda_2, \lambda_2, \lambda_e, \lambda_{last}\} \qquad (22)$$

In case $\lambda_\Psi^{\alpha\beta} = \lambda_\Psi^{\alpha\alpha}$, the coefficients of the decomposition on the basis (21) are related with the macroscopic quantities as

$$\left(\vec{N}, \vec{e}_1\right) = c_s^2 \frac{\rho}{\sqrt{5}}$$

$$\left(\vec{N}, \vec{e}_2\right) = \frac{J_x}{\sqrt{10}}$$

$$\left(\vec{N}, \vec{e}_3\right) = \frac{J_y}{\sqrt{10}}$$

$$\left(\vec{N}, \vec{e}_4\right) = \frac{J_z}{\sqrt{10}}$$

$$\left(\vec{N}, \vec{e}_5\right) = \frac{j_x j_y}{2\sqrt{2}\rho} \qquad\qquad + \frac{1}{6\sqrt{2}} \frac{1}{\lambda_\psi} \left( \frac{\partial j_x}{\partial y} + \frac{\partial j_y}{\partial x} \right)$$

$$\left(\vec{N}, \vec{e}_6\right) = \frac{j_y j_z}{2\sqrt{2}\rho} \qquad\qquad + \frac{1}{6\sqrt{2}} \frac{1}{\lambda_\psi} \left( \frac{\partial j_y}{\partial z} + \frac{\partial j_z}{\partial y} \right)$$

$$\left(\vec{N}, \vec{e}_7\right) = \frac{j_x j_z}{\sqrt{2}\rho} \qquad\qquad + \frac{1}{6\sqrt{2}} \frac{1}{\lambda_\psi} \left( \frac{\partial j_x}{\partial z} + \frac{\partial j_z}{\partial x} \right)$$

$$\left(\vec{N}, \vec{e}_8\right) = \frac{\left(2j_x^2 - \left(j_y^2 + j_z^2\right)\right)}{2\sqrt{3}\rho} \qquad +\frac{\sqrt{3}}{9\lambda_\psi} \left( 2\frac{\partial j_x}{\partial x} - \left( \frac{\partial j_y}{\partial y} + \frac{\partial j_z}{\partial z} \right) \right)$$

$$\left(\vec{N}, \vec{e}_9\right) = \frac{\left(j_y^2 - j_z^2\right)}{2\rho} \qquad\qquad + \frac{1}{3} \frac{1}{\lambda_\psi} \left( \frac{\partial j_y}{\partial y} - \frac{\partial j_z}{\partial z} \right)$$

$$\left(\vec{N}, \vec{e}_{10}\right) = 0$$

$$\left(\vec{N}, \vec{e}_{11}\right) = \frac{7J_x}{6\sqrt{10}} \qquad\qquad +$$

$$\left(\vec{N}, \vec{e}_{12}\right) = \frac{7J_y}{6\sqrt{10}} \qquad\qquad +$$

$$\left(\vec{N}, \vec{e}_{13}\right) = \frac{7J_z}{6\sqrt{10}} \qquad\qquad +$$

$$\left(\vec{N}, \vec{e}_{14}\right) = -c_s^2 \frac{5\sqrt{2}}{12} \rho + \frac{\left(j_x^2 + j_y^2 + j_z^2\right)}{2\sqrt{2}\rho} \qquad + \frac{1}{3\sqrt{2}} \frac{1}{\lambda_e} \left( \frac{\partial j_x}{\partial x} + \frac{\partial j_y}{\partial y} + \frac{\partial j_z}{\partial z} \right), c_s^2 = 1/3.$$

$$\left(\vec{N}, \vec{e}_{15}\right) = -c_s^2 \frac{2\sqrt{2}}{3\sqrt{5}} \rho, \quad c_s^2 = 1/3. \qquad\qquad\qquad (23)$$

Similar as above, vector $\vec{N}$-$\vec{N}^{eq}$ has no projection on first four vectors, corresponding to mass and momentum and the corresponding terms can be omitted in summation in Eq. (6).

The basis vectors are mainly chosen among the polynomial vectors coming into Chapman-Enskog expansion. In case of a more general model, the eigenvalues $\lambda_\psi^{\alpha\beta}$ and $\lambda_\psi^{\alpha\alpha}$ can differ under condition that equilibrium function is modified accordingly to recover the invariance of viscous term in Navier-Stokes equations. Similar generalization can be done for D3Q15 Model. We assume $\lambda_\Psi^{\alpha\beta}$ and $\lambda_\Psi^{\alpha\alpha}$ be equal between them and denote them as $\lambda_\Psi$. Eigenvalues $\lambda_e$ and $\lambda_\Psi$ enter as the coefficients into first order expansion (cf. (14)) and therefore, determine the transport coefficients to be described later. Other eigenvalues are free.

"Magic solution" for free eigenvalues relates the eigenvalues associated with the odd order polynomial eigenvectors ($\lambda_{odd} = \{\lambda_2, \lambda_{xyz}\}$) to those associated with the even order polynomials ($\lambda_{even} = \{\lambda_e , \lambda_\Psi , \lambda_{last}\}$) through "magic" condition

$$\lambda_{odd}\left(\lambda_{even}\right)=-8\frac{\lambda_{even}+2}{\lambda_{even}+8}. \qquad (24.1)$$

Its properties are discussed in the following with respect to the discussion of the boundary conditions. When the non-linear term is present at equilibrium (10), the solution (24.1) is not more exact for Poiseuille flow until "free" projection $\alpha\vec{H}$ is introduced into the equilibrium function

$$\vec{N}^{eq.} \rightarrow \vec{N}^{eq.} + \alpha\vec{H}. \qquad (24.2)$$

Here, $\alpha$ is some constant and $\vec{H}$ is given by relation (18) in case of D2Q9 Model:

$$\vec{H} = -3\sqrt{2}\vec{e}_8 - 3\sqrt{2}\vec{e}_9, \qquad for \qquad D2Q9;$$

$$\vec{H} = -\frac{5\sqrt{2}}{2}\vec{e}_{14} + \sqrt{10}\vec{e}_{15}, \qquad for \qquad D3Q15. \qquad (24.3)$$

Important here that equilibrium projection on $\vec{H}$ does not influence derived Navier-Stokes equations. Coefficient $\alpha$ can be used to annihilate the contribution of non-equilibrium term to $\varepsilon N_i^{(1)}$. In particular, when

$$\alpha = \frac{1}{12}\left(j_x^2 + j_y^2\right), \qquad for \qquad D2Q9,$$

$$\alpha = -\frac{1}{6}\left(j_x^2 + j_y^2 + j_z^2\right), \qquad for \qquad D3Q15, \qquad (24.4)$$

such a term vanish when $\vec{j}$ has only one non-zero component, e.g. Poiseuille flow. In terms of equilibrium weights, solution (24.4) means that the projection of equilibrium in a form (10) is doubled in 2D:

$$\left(\vec{N}^{eq.} + \alpha\vec{H}, \vec{H}\right)= 2\left(\vec{N}^{eq.}, \vec{H}\right).$$

In 3D, we have

$$\left(\vec{N}^{eq.} + \alpha\vec{H}, \vec{H}\right)= 4\left(\vec{N}^{eq.}, \vec{H}\right).$$

Numerical computations confirm that when $\alpha\vec{H}$ is added to equilibrium and magic solution (24.1) is employed for free eigenvalues, Poiseuille profile in a channel of given width is obtained exactly, likely as in case of linear equilibrium function.

"First order solution" for free eigenvalues put all eigenvalues except $\lambda_\Psi$ equal to -1:

$$\lambda_2 = \lambda_e = \lambda_{xyz} = \lambda_{last} = -1. \tag{24.5}$$

In this case, only projection on second oder polynomial basis vectors associated with $\lambda_\psi$ does not vanish after collision. This becomes especially transparent when the collision is written in the equivalent form:

$$N_i\left(\vec{r},t\right) = N_i^{eq.}\left(\vec{r},t\right) + \sum_{k=0}^{b_m} \left(1+\lambda_k\right)\left(\vec{N}-\vec{N}^{eq.}, \vec{e}_k\right)e_{ki}. \tag{24.6}$$

In case of free interface computing, we neglect $O(\frac{2}{\varepsilon})$ and $O(M^2)$ terms associated with the eigenvalues $\lambda_e$ and free eigenvalues at Chapman-Enskog expansion at the reconstruction step described below with respect to the reconstruction of unknown populations. Assuming that first order collision could dump the oscillations in these terms, we use it often for calculations. Following linearized stability analysis without free interface as described in P. LALLEMAND AND LI-M Luo, Theory of the Lattice Boltzmann Method: Dispersion, Dissipation, Isotropy, Galilean Invariance, and Stability. Phys.Rev.E 61, 6546(2000), incorporated herein by reference, however, magic collision (24.1) is found to be superieure in stability over first order collision and extremely stable.

After having discussed how to abtain the projection of the vectors $\vec{N}^{eq.}$ (10) and $\varepsilon\vec{N}^{(1)}$ (14) on the basis vectors which are given by formulas (20) and (23) reference is made to Eq. 14, (15) and (16) in order to derive macroscopic relations. Obtained from first order expansion macroscopic relations have a form

$$\partial_t \rho + \nabla \cdot \vec{j} = 0,$$

$$\partial_t \vec{j} + \nabla \cdot \left(\frac{\vec{j}:\vec{j}}{\rho}\right) = -c_s^2 \nabla\rho + \vec{F} + \nabla\cdot\left(\nu\nabla\vec{j}\right) + \nabla\left(\nabla\cdot\nu_\xi\vec{j}\right)\nu_\xi = \left[\nu(2-3C)+\xi\right] \tag{24}$$

Kinematic viscosity $\nu$ is related to the eigenvalue $\lambda_\psi$ as:

$$\nu = \frac{1}{3}\left(\tau - \frac{1}{2}\right), \; here \; and \; below : \tau = -\frac{1}{\lambda_\psi}. \tag{25}$$

and bulk viscosity $\xi$ is related to eigenvalue $\lambda_e$:

$$\xi = -\left(\vartheta - c_s^2\right)\left(\frac{1}{\lambda_e} + \frac{1}{2}\right); \quad \theta = \frac{D+2}{3D} \; for \; D2Q9, \, D3Q15. \tag{26}$$

Pressure P is proportional to density: $P = c_s^2\rho$. Assume that the LB density of the modeled fluid be $\rho_0$ and the reference pressure be $P_O$, $P_0 = c_s^2\rho_0$. Let us rewrite Eqs. (24) in the following dimensionless variables:

$$\chi' = \chi / L, \qquad t' = tU/L, \qquad \vec{u}' = \vec{u}/U, \qquad P' = (P - P_0)/(\rho_0 U^2). \tag{27}$$

Substitution of the relations (27) into Eqs. (24) yields (the primes are dropped)

$$M^2 \partial_t P + \nabla \cdot \vec{\rho u} = 0,$$

$$\partial_t \vec{\rho u} + \nabla \cdot \left( \vec{\rho u} \otimes \vec{u} \right) = -\rho_0 \nabla P + \rho_0 Fr^{-1} + Re^{-1} \nabla \cdot \left( \nabla \left( \vec{\rho u} \right) \right) + \nabla \left( \frac{\nu_\xi}{UL} \nabla \cdot \left( \vec{\rho u} \right) \right),$$

$$\rho = \rho_0 \left( 1 + M^2 P \right), \tag{28}$$

Here, the Reynolds number *Re,* the Froude number *Fr* and the Mach number *M* are

$$Re = LU / \nu, \ Fr = U^2 / gL, \ M = U / c_s. \tag{29}$$

If we substitute ρ*(P)'* in a form (28) and neglect the terms associated with $M^2$, we reduce relation (28) to incompressible Navier-Stokes equation:

$$\nabla \cdot \vec{u} = 0,$$

$$\partial_t \vec{u} + \vec{u} \cdot \nabla \vec{u} + \nabla P = Fr^{-1} + Re^{-1} \Delta^2 \vec{u}. \tag{30}$$

In particular, Stokes equation is obtained when the non-linear term is omitted in relation (10). The sound speed is free parameter of the equilibrium. The restriction $c_s^2 < C$ comes from the condition $\xi > 0$ (see Eq. (26)). An exemplary choice for $c^2$ is 1/3.

In the absence of surface tension between two fluids, momentum conjunction condition at interface S between the fluids (e.g, liquid-gas) reads

$$\left[ 2\nu Dj \cdot \vec{n} - P \cdot \vec{n} \right]_S = 0, \qquad Dj = \frac{1}{2} \left( \nabla \vec{j} + \nabla^t \vec{j} \right), \tag{31}$$

Assuming that the viscosity of gas phase is negligible, the relation (31) reduces to the following free interface conditions for liquid phase:

$$P - 2\nu \frac{\partial j_n}{\partial n} = P_0, \tag{32}$$

$$\frac{\partial j_r}{\partial n} + \frac{\partial j_n}{\partial \tau} = 0. \tag{33}$$

Here $j_n$ und

$$j_\tau = \left\{ j_{\tau_1}, j_{\tau_2} \right\}$$

are the normal and tangential momentum components of the viscous fluid, *P* is the pressure of the fluid and $P_0$ is the gas pressure at the interface S.

After having discussed the Lattice Boltzmann equations describing the collision or the relation between populations at consecutive time steps, and the first order Chapman-Enskog expansion describing the relation between the microscopic values and the macroscopic values by a development of the population solution around the equilibrium condition, the description now focus on applying the first order Chapman-Enskog expansion to a "reconstruction" of unknown populations of interface cells. As mentiond before, since, for bulk cells, all populations are known, the Lattice Boltzmann equation as for example, defined in (6) can be fully solved and the collision can be performed, respectively. For the interface cells, where not all populations are unknown, and the LB equilibrium can not be solved exactly. In order to recontruct unknown populations, the relation between microscopic populations and macroscopic values is exploited in order to derive the unknown populations. As will turn out in the following, due to a invariance with respect to rotation of the first order Chapman-Enskog expansion the population solutions can be expressed naturally in a local coordinate system associated with the normal to interface, thereby facilitating the change of the coordinate system Eq. (14) is based on.

Populations

$$\{ N_i(\bar{r}_i,t) \}$$

and quantity of fluid

$$\rho_f(\bar{r}_i,t)$$

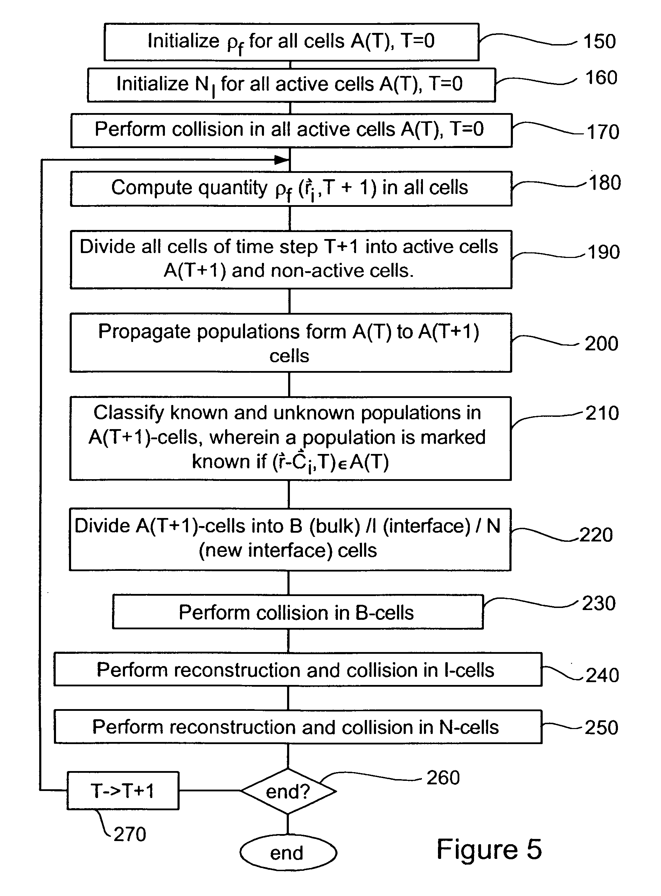

represent main independent variables in the computation or simulation procedure of an free interface according the specific embodiment as it will be described with respect to figure 5. In the empty cells, $\rho_f = 0$; in the cells fully filled with a fluid, $\rho_f = \rho$; and in partially filled cell, $0 < \rho_f < \rho$. A Collision step is performed only in the "active" points where $0 < \rho_f < \rho$. The gravitation force is computed in proportion to current occupation of the cell:

$$\vec{F} = \rho_f / \rho [\rho_0 \vec{g}]. \tag{34}$$

where $\rho_0$ is the maximal occupation of a cell.

Non determined from the LB evolution equation, unknown populations at front nodes or interface cells are reconstructed in a form of the first order Chapman-Enskog expansion. A crucial point of the reconstruction lies in invariance of $\varepsilon\vec{N}^{(1)}$ under any space isometry. Therefore, this term has the same form in any orthogonal coordinate system. One can write it in the interface coordinate system $\{x',y',z'\}=\{n,\tau_1,\tau_2\}$:

$$\varepsilon N_i^{(1)} = \frac{1}{\lambda_\psi} \frac{\partial j_{\alpha'}}{\partial \beta'} Q_{i\alpha'\beta'} + \frac{1}{\lambda_e} \nabla \cdot \vec{j} E_i^{im}, \quad Q_{i\alpha'\beta'} = t_p^* \left( C_{i\alpha'} C_{i\beta'} - \frac{c_i^2}{D} \delta_{\alpha'\beta'} \right). \tag{35}$$

Note that the non-diagonal components of the strain-rate tensor $D_j$ come as the coefficients associated with $\vec{Q}_{in\tau}$ into relation (35). By equating these coefficients to zero, we introduce interface condition (33) into expansion. Taking into account that $\frac{\partial j_{\tau_1}}{\partial \tau_1} + \frac{\partial j_{\tau_2}}{\partial \tau_2} = \nabla \cdot \vec{j} - \frac{\partial j_n}{\partial n}$ and $Q_{i\tau_1\tau_1} + Q_{i\tau_2\tau_2} = -Q_{inn}$, we obtain first order expansion in the form:

$$N_i = N_i^{eq.} + \begin{cases} \dfrac{2}{\lambda_\psi} \dfrac{\partial j_n}{\partial n} Q_{inn} + \nabla \cdot \vec{j} \left( \dfrac{1}{\lambda_e} E_i^{im} - \dfrac{1}{\lambda_\psi} Q_{inn} \right), \; for \; D2Q9, \\[4mm] \dfrac{3}{2\lambda_\psi} \dfrac{\partial j_n}{\partial n} Q_{inn} + \nabla \cdot \vec{j} \left( \dfrac{1}{\lambda_e} E_i^{im} - \dfrac{1}{2\lambda_\psi} Q_{inn} \right) + \dfrac{1}{2\lambda_\psi} \left( \dfrac{\partial j_{\tau_1}}{\partial \tau_1} - \dfrac{\partial j_{\tau_2}}{\partial \tau_2} \right) \{ Q_{i\tau_1\tau_1} - Q_{i\tau_2\tau_2} \} \\[4mm] \qquad + \dfrac{1}{\lambda_\psi} \left( \dfrac{\partial j_{\tau_1}}{\partial \tau_2} + \dfrac{\partial j_{\tau_2}}{\partial \tau_1} \right) Q_{i\tau_1 i\tau_2}, \; for \; D3Q15. \end{cases} \tag{36}$$

In the following, we neglect $O(M^2)$ term $\nabla \cdot \vec{j}$ in (36). We reduce then the normal derivative $\frac{\partial j_n}{\partial n}$ by using interface condition (32). The values of known populations, which arrive at front nodes from the active points, are used then to derive unknown macroscopic quantities ($\rho, \vec{j}$, tangential momentum derivatives) from the relations (36) by solving the linearized system in least square sense. We recall that that the local computing of unknown populations at front nodes is called as reconstruction step which is discussed in detail below.

After having presented the mathematical framework, a method for computing and simulating an free interface according to a specific embodiment of the present invention is described with regard to Figure 5.

In step 150, $\rho_f$ is first initialized in all liquid cells at time step t=0. In step 160, populations of all active cells (say, A(t)-cells), where $\rho_f > 0$, are initialized, and in step 170, a first collision step is performed in the active cells.

The subsequent steps are performed at discrete times $t=T$, with $T=0,1, ...$ In step 180, the quantity $\rho_f(\vec{r}, T+1)$, i.e. the quantity of fluid in the cell for the subsequent time step $t=T+1$, is computed in all cells by a recoloring technique described below. That is, in step 180, in particular those cells are determined which are active in the subsequent time step T+1, i.e. the cells where $\rho_f > 0$, with $0 < \rho_f < \rho$. In step 190, all cells of the time step $T+1$ are divided into active/non-active cells ($A(T+1)/\bar{A}(T+1)$)-cells, wherein a cell is regarded as active, i.e. $(\vec{r}, T+1) \in A(T+1)$, if its quantity $\rho_f$ is greater zero, i.e. $(\vec{r}, T+1) \in A(T+1)$ if $\rho_f(\vec{r}, T+1) > 0$, otherwise the cell is regarded as non-active. In step 200, populations $N_i$ are propagated from active cells of time step T, i.e. where $\vec{r} \in A(T)$, into active cells of time step $T+1$, i.e. where $\vec{r} \in A(T+1)$. In step 210, known and unknown populations are classified in $A(T+1)$ cells, wherein a population $N_i(\vec{r}, T+1)$ is marked as known population if the cell the population is emanating from was active at time step T, i.e. if

$$\left(\vec{r} - \bar{C}_i, T\right) \in A(T).$$

Otherwise it is marked as unknown population. In step 220, all cells being active at time step T+1, i.e. all A(T+1) cells, are divided into B-, I- and N-cells. An active cell, i.e. where $(\vec{r}, T+1) \in A(T+1)$, is marked as B(bulk)-cell if it has obtained only known populations. An active cell $(\vec{r}, T+1) \in A(T+1)$ is marked as I(interface)-cell if it has obtained at least one unknown population, i.e.

$$\exists i \mid \left(\vec{r} - \bar{C}_i, T\right) \notin A(T),$$

and if $(\vec{r}, T) \in A(T)$. An active cell $(\vec{r}, T+1) \in A(T+1)$ is marked as N(new interface)-cell if the cell was not active at time step T, i.e. if $(\vec{r}, T) \notin A(T)$. Then, in step 230, collision is performed in all B-cells. This step can readily be performed by use of the Lattice Boltzmann equation describing the relation between the microscopic populations and time and space since in B-cells all populations are known. Since, for I- and N-cells, by definition, at least one population is unknown, the unknown populations have to be reconstructed. This reconstruction and a collision is performed, by use of the first order Chapman-Enskog expansion as will be described in the following, in step 240 for all I-cells, and in step 250 for all N-cells. In step 260, it is checked if the simulation procedure has reached an finishing condition. Such an condition could be that the time $t$ has reached an upper limit, or that a fully filled condition has been reached in case of a filling or molding simulation. If the simulation has reached its end, the procedure is finished. Otherwise, the time variable $t$ is incremented in step 270, wherein then steps 180 - 250 are repeated.

This completes the short description of the LB free interface procedure. Below we give details for the specific steps of the procedure of figure 5.

The recoloring algorithm of step 180 of figure 5 is employed to advect the quantity $\rho_f$ between the cells by keeping a sharp front. The operation tends to send as much as possible fluid phase into direction of its bulk. Let $\vec{N}^R(\vec{r}, t)$ maximizes post-collision fluid flux $S[\vec{R}(\vec{r}, t)]$ along the normal to interface $\vec{n}$, constrained to mass conservation:

$$S\left(\vec{R}\right) = \sum_{i=0}^{b_m} R_t\left(\bar{C}_i \cdot \vec{n}\right) \sum_{i=0}^{b_m} R_i = \rho_f, \; 0 \leq R_i \leq \tilde{N}_i. \tag{37}$$

New value $\rho_f(\vec{r}, t+1)$ accumulates a sum of all incoming fluid quantities

$$N_i^R\left(\vec{r} - \bar{C}_i, t\right):$$

$$\rho_f\left(\vec{r},\, t\,+\,1\right) = \sum_{i=0}^{b_m} N_i^R\left(\vec{r}\,-\,\vec{C}_i,\, t\right) \tag{38}$$

We compute $\vec{n}$ as

$$\vec{n} \approx \nabla\rho_f. \tag{39}$$

By using a central difference stencil, one obtains the following approximation

$$\vec{n} = \sum_{i=1}^{b_m} s_i \vec{C}_i \rho_f\left(\vec{r}\,+\,\vec{C}_i\right) \qquad s = \begin{cases} 1/4\ \times\ \{2,2,2,2,1,1,1,1\}, & for\ D2Q9, \\ 1/8\ \times\ \{4,4,4,4,1,1,1,1,1,1,1,1\} & for\ D3Q15. \end{cases} \tag{40}$$

Note that the LB "color gradient" $\vec{n}^{col.grad.}$ corresponds to $\vec{s} = \vec{1}$ when density fluctuations are neglected:

$$\vec{n}^{col.grad.} = \sum_{i=1}^{b_m} \vec{C}_i \rho_f\left(\vec{r}\,+\,\vec{C}_i\right) \tag{41}$$

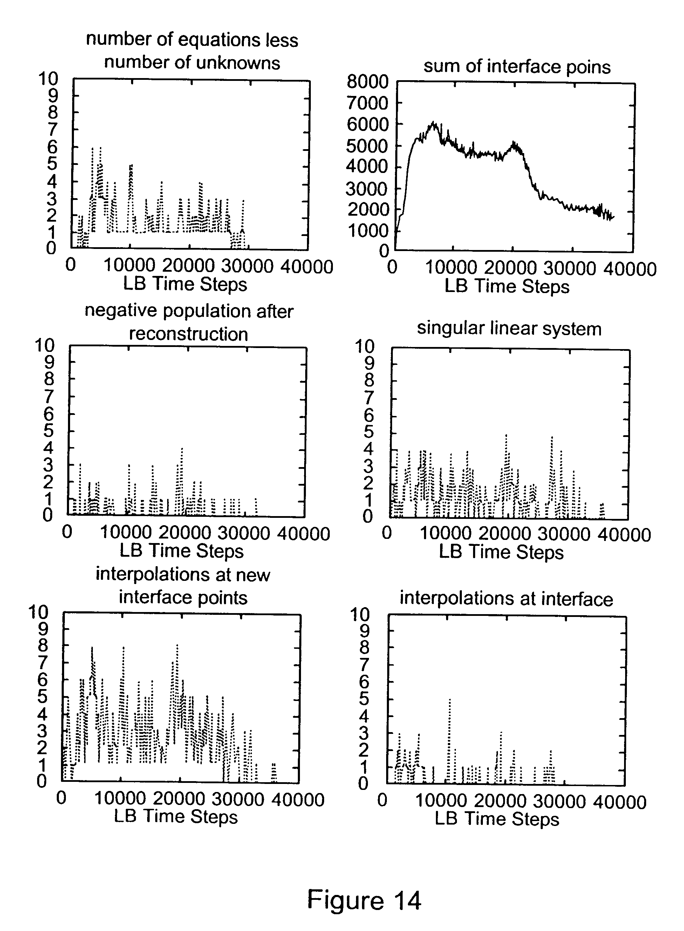

A method for normal estimation which reproduces a line (a plane) exactly regardless its orientation with respect to fixed coordinate system is referred to as second order method. With this criterion, approximations (40), (41) which are done separately for each cell are only first order accurate. This is confirmed by simple advection tests described in the following with respect to figure 14a -14c. The possibility to have wetting/non-wetting condition at solid boundary is controlled by the following assignment: $\rho_f(\vec{r}^{solid}) = \rho_f \times w$, $w > 0$ in wetting case, and $w < 0$, otherwise. In computations below we assume mostly that interface is perpendicular to solid boundary: $(\vec{n}, \vec{n}^s) = 0$. Here and below, $(\vec{\tau}_1^s, \vec{\tau}_2^s, \vec{n}^s)$ denote the tangential and the normal vectors with respect to the solid wall. In order to model this condition with the relation (40), we define $\rho_f(\vec{r}^{solid})$ at smooth enough walls as

$$\rho_f\left(\vec{r}\,+\,\vec{C}_j\right) = \rho_f\left(\vec{r}\,+\,\vec{C}_i\right)\ if\ \vec{r}\,+\,\vec{C}_j\ =\ \vec{r}^{solid}\ and\ C_{j\,n^s}\ =\ -C_{i\,n^s},\ C_{j\,\tau^s}\ =\ C_{i\,\tau^s}. \tag{42}$$

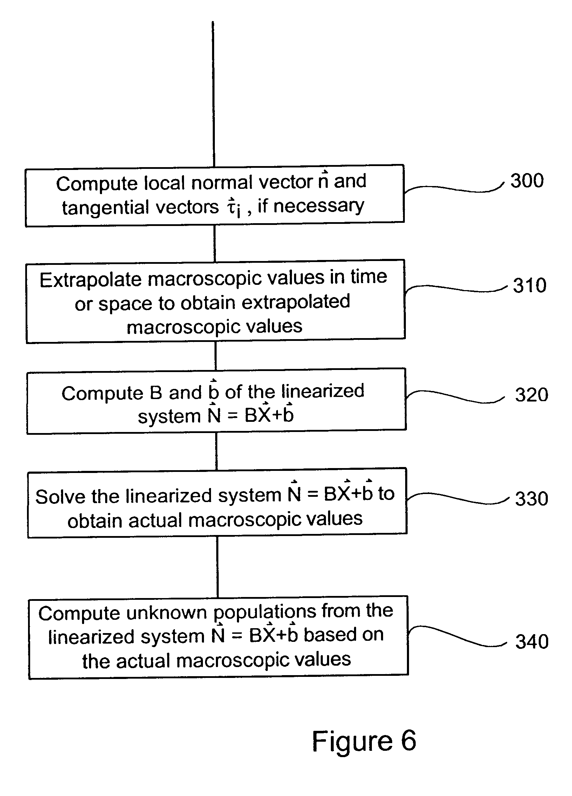

where $\vec{r}^{solid}$ designates wall position, and $C_{ins}$ and $C_{i\tau s}$, are components of $\vec{C}_j$ in direction $\vec{n}^s$, $\vec{\tau}_1^s$, and $\vec{\tau}_2^s$, respectively.
Indeed, the condition (42) uses the same pairs of populations as a specular reflexion (59) as it is sketched in Fig. 6b, and as it will be described in the following with regard to this figure.
In the following, the mathematical framework for the reconstruction step in 230 and 240 will be discussed. As will be shown, the population solution at the interface is completely expressed in terms of the macroscopic density and macroscopic momentum in 2D case. In 3D, it depends additionally on some combinations of the tangential derivatives of the momentum. The macroscopic quantities are not determined, however, until all populations in a given cell are obtained. The idea here is to derive them locally, from the known populations arriving at a given front node from the active points. We obtain unknown quantities from the solution of the local linearized system in least square sense. In such a way, the resulting solution for unknown populations at front nodes is implicitly expressed in the form of a linear combination of the known populations.
As described with respect to step 220 of figure 5, at each interface (I) or new interface (N) cell, the populations are separated into two sets: known and unknown. Let us denote the number of known populations $\{N_i^+\}$, $i \in I^+$, as $S^+$. Set $\{N_i^-\}$, $i \in I^-$, contains then $S^- = b_m + 1 - S^+$ unknown populations, with $b_m$ being the number of directions in the D_Q_ model used. When $\frac{\partial J_n}{\partial n}$ is related with $P(\rho)$ through the condition (32), one can represent the population expansion (36) as

$$\vec{N} = B\vec{X} + \vec{b}, \quad \vec{X} = \begin{cases} \{\rho, j_x, j_y\}, 2D; \\ \{\rho, j_x, j_y, j_z, \dfrac{\partial j_{\tau 1}}{\partial \tau_1} - \dfrac{\partial j_{\tau 2}}{\partial \tau_2}, \dfrac{\partial j_{\tau 1}}{\partial \tau_2} + \dfrac{\partial j_{\tau 2}}{\partial \tau_1}\}, 3D. \end{cases} \tag{43}$$

Vector $\vec{X}$ contains 3 unknown macroscopic quantities in 2D, i.e. the macroscopic density and he components of the macroscopic momentum, and 6 unknowns in 3D, i.e. the macroscopic density, the components of the macroscopic momentum, and two combinations of tangential derivatives of the macrscopic momentum. When we do not omit $\nabla \cdot \vec{j}$-term in relation (43), we include it into list of variables $\vec{X}$. The elements of the matrix B depend upon the linearization of the equilibrium (10).

One possible way of linearizing the first order Chapman Enskog expansion is a linearizion with respect to momentum in which nonlinear term $\rho u_\alpha u_\beta$ in (10) is approximated as

$$\rho u_\alpha u_\beta = j_\alpha u_\beta^{app.}. \tag{44}$$

Here $u_\beta^{app.}$ is some approximate or extrapolated velocity value discussed bellow. Let us introduce $Q_{ia}$:

$$Q_{i\alpha} = \sum_\beta \frac{u_\beta^{app.}}{2} \left(3C_{i\alpha}C_{i\beta} - \delta_{\alpha\beta}\right), \ \forall \alpha = 1, \ldots, D. \tag{45}$$

Then for D2Q9 Model coefficients in (43) are

$$B_{i,1} = t_p^\bullet c_s^2 + \frac{c_s^2}{\nu} \frac{1}{\lambda_\psi} Q_{inn},$$

$$B_{i,2} = t_p^\bullet \left(C_{ix} + Q_{ix}\right), \ B_{i,3} = t_p^\bullet \left(C_{iy} + Q_{iy}\right),$$

$$b_i = -\frac{1}{\nu} \frac{1}{\lambda_\psi} P_0 Q_{inn} - \frac{1}{2} t_p^\bullet \frac{\rho_f}{\rho^{app.}} \rho_0 \left(\vec{C}_i, \vec{g}\right) \tag{46}$$

and for D3Q15 Model:

$$B_{i,1} = t_p^\bullet c_s^2 + \frac{3c_s^2}{4\nu} \frac{1}{\lambda_\psi} Q_{inn},$$

$$B_{i,2} = t_p^\bullet \left(C_{ix} + Q_{ix}\right), \ B_{i,3} = t_p^\bullet \left(C_{iy} + Q_{iy}\right), \ B_{i,4} = t_p^\bullet \left(C_{iz} + Q_{iz}\right),$$

$$B_{i,5} = Q_{i\tau_1\tau_1} - Q_{i\tau_2\tau_2}, \ B_{i,6} = Q_{i\tau_1\tau_2},$$

$$b_i = -\frac{3}{4\nu} \frac{1}{\lambda_\psi} P_0 Q_{inn} - \frac{1}{2} t_p^\bullet \frac{\rho_f}{\rho^{app.}} \rho_0 \left(\vec{C}_i, \vec{g}\right) \tag{47}$$

Approximation to force-term appears in $\vec{b}$ since we consider here $\vec{j}$ rather than $\vec{J}$ as an unknown variable in

$\vec{X}$ (cf. (10)). The linearized equations to find $\vec{X}$ correspond to $S^+$ populations

$$B_{ij}X_j = r_i, \; r_i = N_i^+ - b_i, \; i \in I^+. \tag{48}$$

One can introduce further constraints on $\vec{X}$. We improve stability and accuracy considerably when solution is required to fulfill approximate density definition (1) in a form:

$$\rho - \sum_{i \in I^-} N_i^- = \sum_{i \in I^+} N_i^+. \tag{49}$$

Substitution of the population expansion (33) into (49) for $N_i^-$ yields an additional equation:

$$B_{add,j}X_j = r_{add}, \; B_{add,1} = 1 - \sum_{i \in I^-} B_{i,1}, \; B_{add,k} = -\sum_{i \in I^-} B_{i,k}, \; r_{add} = \sum_{i \in I^+} N_i^+ + \sum_{i \in I^-} b_i. \tag{50}$$

This completes assembling of the matrix B and the vector $\vec{b}$. Different from the relation (44) linearizations of the equilibrium can be proposed.
Another possible linearization is to linearize with respect to density. In particular, this treats the non-linear term as

$$\rho u_\alpha u_\beta = \rho u_\alpha^{app.} u_\beta^{app.}. \tag{51}$$

In case (51), one can take $\vec{J}$ itself as a component in $\vec{X}$. This avoids approximation of the density (cf. (46)-(47)). In 2D, for example, relations (46) are modified as follows:

$$B_{i,1} = t_p^* c_s^2 + \frac{c_s^2}{v}\frac{1}{\lambda_\psi}Q_{inn} + t_p^* \sum_{\alpha\beta} \frac{u_\alpha^{app.}u_\beta^{app.}}{2}\left(3C_{i\alpha}C_{i\beta} - \delta_{\alpha\beta}\right), \tag{52}$$

$$B_{i,2} = t_p^* C_{ix}, \; B_{i,3} = t_p^* C_{iy}, \; b_i = -\frac{1}{v}\frac{1}{\lambda_\psi}P_0 Q_{inn}. \tag{53}$$

Eq. (46), (47), (52) and (53) form a possible tool for constructing a linearized system describing a relation between the microscopic populations and the macroscopic values of vector $\vec{X}$ as it is used in the reconstruction steps 240 and 250 of the embodiment of figure 5.
The reconstruction procedure performed on the N- and I-cells by use of the above derived linearized system in steps 240 and 250 of the embodiment of figure 5 is shown in figure 6 for a single N- or I-cell. In step 300, the normal vector $\vec{n}$ is computed locally, for example, by use of Eq. (39). The normal vector may also be computed by use of density values of neighboring cells. When necessary, the tangential vectors $\vec{\tau}_1$ and $\vec{\tau}_2$ are computed in step 300 as well. These vectors will be used as the orthonormal basis based on which the first order Chapman-Enskog expansion is used. In step 310, macroscopic velocity and/or density values, depending upon the aforementioned linearization type used, are extrapolated in time or space. These extrapolated values are used to compute the coefficients of matrix B and vector $\vec{b}$ of Eq. (43) in step 320, by use of Eq. (46), (47), (52) and (53), respectively.
The approximate or extrapolated values $\rho^{app.}$ and $\vec{u}^{app.}$, in case of linearization with respect to momentum, and the approximate or extrapolated value $\vec{u}^{app.}$, in case of linearization with respect to density, are obtained as follows.

In already active I-cells (see fig. 5, step 220 and 240, respectively), they may be extrapolated from the previous time step solution. In new interface N-cells, extrapolation from the active cells lying as close as possible along the normal may be employed, either exclusively or additionally to time extrapolation. At least one neighbor active node always exists by the definition of N-cell, otherwise it would be not activated. Since the collision, and hence update of $\rho$ and $\vec{u}$, is done first in Band I- cells (see figure 5, steps 230 and 240, respectively), reconstruction step in N-cells (step 250) can use current solution in neighboring B- and I-cells for extrapolations.

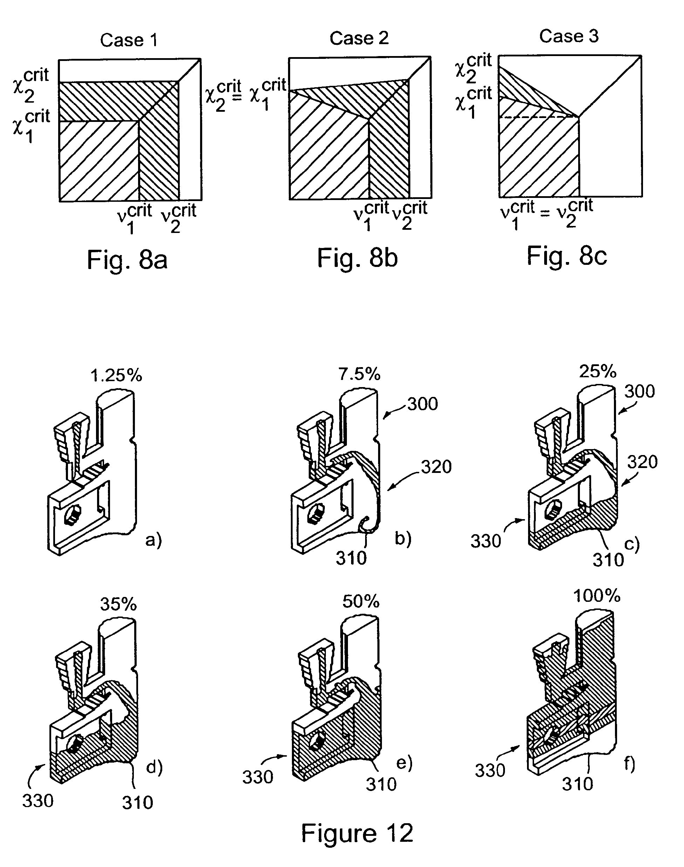

After the linearized system of (37) and (38) has been obtained by computing the coefficients of $B$ and $\vec{b}$ by use of the extrapolated macroscopic values, the linearized system is solved in step 330 in order to obtain the unknown macroscopic values of $\vec{X}$. After step 320, the linearized system contains $m$=S$^+$+1 Eqs. (37), (38): $2 \leq m \leq b_m$+1. The number of variables n is equal to the number of components of the vector $\vec{X}$. When $n \leq m$, the linear system is solved by using a fast least-square method with permutations. A Single Value Decomposition Method as described in W. H. PRESS, S. A. TEUKOLSKY, W. T. WETTERLING, AND B. P. FLANNNERY, Numerical Recipes in C. (Cambridge Univ. Press, Cambridge,UK,1992) which is incorporated herein by reference, or some other extrapolation method may be used as well. If the system is singular, or when n > $m$, extrapolations for unknown populations from neighbor "good" active points are performed wherein the extrapolation for these unknown populations is performed similarily to the extrapolation performed in step 310 with respect to the extrapolated macroscopic values. The extrapolation of one or more unknown populations can also be employed when one of the populations becomes negative after the reconstruction or collision. The populations are demanded to be positive not only from the stability assumptions but because of the requirements of the recoloring algorithm described with respect to step 180 of figure 5 as well, but a negative value might be tolerateable in some cases. Moreover, as will be discussed below with regard to figure 12, the relative part of "bad" situations where negative populations occur or where too less populations are known is very small in stable calculations. When combinations of tangential derivatives in 3D are not included into $\vec{X}$ (43), one does not need then to construct tangential vectors $\vec{\tau}_1$ and $\vec{\tau}_2$. Moreover, this reduces the number of singular cases since the number of unknowns decreases from n=6 to n=4. No important impact on the solution was detected because of this approximation.

After having derived the unknown macroscopic values $\vec{X}$ in step 330, by use of linear equation (43) the unknown populations of interest are computed in step 340.

Steps 320, 330 and 340 may be repeated iteratively by using the macroscopic velocity/density values obtained at a previous sub-iteration in step 330 for approximations in step 320.

After step 340, all unknown populations of the cell have been reconstructed and therefore, enough information is available for performing the collision by use of the Lattice Boltzmann equation in steps 240 and 250 of fig. 5, respectively.

After having described a specific embodiment of the present invention with regard to the modeling of interface of a fluid, in the following the handling of solid-fluid-interfaces and the inlet conditions are discussed.

While applying the simulation in very complex geometries, its "step-wise" cellcentered discretization on the regular rectangular grids is accepted. At boundary nodes the bounce-back rule (b.b.) is applied where the populations leaving the fluid return to the node of departure with the opposite velocity:

$$N_{-i}\left(\vec{r}, t+1\right) = \tilde{N}_i\left(\vec{r}, t\right), \quad if \ \vec{r} + \vec{C}_i \in solid, \quad \vec{C}_{-i} = \vec{C}_i. \tag{54}$$

Let us first consider the condition (54) at order $O(\varepsilon^0)$, i.e. when

$$\tilde{N}_i\left(\vec{r}, t\right) = N_i\left(\vec{r}, t\right) = N_i^{eq.}\left(\vec{r}, t\right).$$

Modification of momentum definition by $\frac{1}{2}\vec{F}$ (cf. (2),(10)) enables us to analyze obtained closure relations independently on the force term in Eq. (6) since b.b holds:

$$-\frac{1}{2} t_p^\bullet\left(\vec{C}_{-i}, \vec{F}\right) = -\frac{1}{2} t_p^\bullet\left(\vec{C}_i, \vec{F}\right) \overset{force}{+} t_p^\bullet\left(\vec{C}_i, \vec{F}\right) = \frac{1}{2} t_p^\bullet\left(\vec{C}_i, \vec{F}\right) = -\frac{1}{2} t_p^\bullet\left(\vec{C}_{-i}, \vec{F}\right) \tag{55}$$

and therefore, momentum projection on the link $\vec{C}_i$ should vanish at $\vec{r}$ :

$$\left(\vec{j} \cdot \vec{C}_i\right)\left(\vec{r}, t\right) = 0.$$ (56)

Substitution of the first order expansion (24) into the b.b condition (43) shifts wall location to the middle between the current node $\vec{r}$ and the neighbor node $\vec{r}+\frac{1}{2}\vec{C}_i$. So, at order $O(\varepsilon^1)$ :

$$\left(\vec{j} \cdot \vec{C}_i\right)\left(\vec{r} + \frac{1}{2}\vec{C}_i, t\right) = 0.$$ (57)

Condition (57) is exact for linear flow only, similar as its generalizations, which annihilate

$$\left(\vec{j} \cdot \vec{C}_i\right)$$

at a given distance between $\vec{r}$ and $\vec{r}+\vec{C}_i$. When second order Chapman-Enskog expansion is substituted into b.b. condition, i.e. curvature of the flow is taken into account, the analysis shows that effective wall location depends on the choice of the whole set of the eigenvalues. So far, it depends on the kinematic and bulk viscosities values. It depends also upon wall inclination with respect to the lattice. In general flows, effective precision of the b.b. rule is something between first and second order. It is only of first order, however, in inclined channels, for example. In order to improve the precision of the b.b. boundary conditions, a magic solution for eigenvalues as in (24.1), (24.2) is selected. This solution fulfills exactly closure relation (57) for Poiseuille flow in non-inclined channels. When $\lambda_\psi \to -2$, the first order collision (24.5) is not so precise as the magic collision for b.b rule but it is still acceptable, since in the limit $\nu \to 0$, the influence of second order $O(n)$ the effective wall position tends to zero.

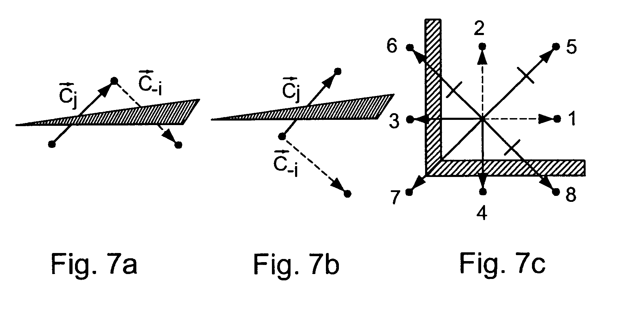

Free-slip boundary conditions is not so intensively studied as bounce-back condition in case of the LB models. Specular reflexions may be used in the LB methods to model it: when the population arrives on the solid from a boundary node, it reflects into the node symmetric with the respect to the normal to the wall. This condition is shown in figure 7a which shows the velocity $\vec{C}_j$ of a population before reflexion at the solid and the velocity $\vec{C}_{-j}$ of a population after the reflexion, and indicates the inclined wall by a bold rectangle. Using first order Chapman-Enskog expansion, one can show that specular reflection at a solid wall provides free slip boundary condition

$$j_{n^s} = 0; \qquad \frac{\partial j_{\tau^s}}{\partial n^s} + \frac{\partial j_{n^s}}{\partial \tau^s} = 0, \qquad \tau^s = \left\{\tau_1^s, \tau_2^s\right\}.$$ (58)

Formally, condition (58) holds up to $O(\varepsilon^2)$ only when the flow is invariant along a wall. In general then, local specular reflexion has approximately the same accuracy. Figure 7b illustrates the local specular reflexion wherein the velocity $\vec{C}_j$ of a population before collision with the solid and the velocity $\vec{C}_{-j}$ of a population after the collision with the solid is shown, and the inclined wall is indicated by a bold rectangle. We implement local specular reflexion in a form:

$$N_{-i}\left(\vec{r}, t + 1\right) = \tilde{N}_j\left(\vec{r}, t\right) \qquad if \quad \left\{\vec{r} + \vec{C}_i, \vec{r} + \vec{C}_j\right\} \in solid,$$
$$and \quad C_{-in^s} = -C_{jn^s}, \quad C_{-i\tau^s} = C_{j\tau^s}.$$ (59)

Relations (59) mean that all populations return into the node of departure. Unlike to bounceback, force addition in (6) is not consistent with the condition (59) when $\vec{F}$ is parallel to the wall. To improve this, one should either omit the corresponding force addition to leaving populations $\tilde{N}_j$ $(\vec{r},t)$, or to implement specular reflection in its classical non-local form, when the populations are reflected into the neighboring nodes. In geometries more complicated than the point near a solid wall, the solution for an unknown population should involve more than one post-collision population. For illustration, a "2D corner condition" is shown in figure 7c wherein the corner is drawn bold and the velocities of the populations are indicated by arrows and are numbered as indicated in figure 4a. As is indicated by dotted arrows 2 and 1 and halfed arrows 5, 6 and 8, the relations between populations $\tilde{N}_i$ before the solid-fluid-collision and the populations $N_i$ afterwards read: $N_1 = \tilde{N}_3$, $N_2 = \tilde{N}_4$, $N_5 = \frac{1}{2}(\tilde{N}_6 + \tilde{N}_8)$, $N_6 = \frac{1}{2}(\tilde{N}_6 + \tilde{N}_7)$, and $N_8 = \frac{1}{2}(\tilde{N}_8 + \tilde{N}_7)$. Thus, in the case of "2D" corner, we compute unknown "corner" populations, both in 2D and in 3D, as an arithmetical mean of specular reflexions with respect to both walls forming the angle. This provides condition free-slip (58) approximately on the both sides. Other computations are possible. Useful test of free-slip boundary conditions is a uniform Stokes flow in an infinite (periodic) channel. This solution is maintained exactly by the relations (59) in 2D case and by using mentioned above reflexions in corners, in 3D case. Similar, free interface algorithm should provide exact solution with density and velocity equal to those at the inlet when constant flux comes into a channel. Linear combination of free-slip/no-slip boundary conditions with some factor $p/(1 - p)$ enables us to model intermediate friction behavior.

After having discussed the boundary conditions, in the following the description focus on the inlet condition when the computation as described above with respect to figures 4 to 7 is applied to conditions as in injection molding or other filling procedures.

Inlet boundary condition is not trivial even in case when constant incompressible flux $\vec{j}^{in} = \rho_0 \vec{U}^{in}$ enters into the domain. Indeed, density $\rho^{in}(\vec{r},t)$ at the inlet is not equal to its initial value $\rho_0$ because of the pressure gradients. So far, $\rho^{in}(\vec{r},t)$ is unknown a priori. Moreover, since mass flux $\vec{j}$ performs the $\rho_f$-transport in case of recoloring algorithm, $\vec{j}$ should be proportional to effective $\rho^{in}$ value and can not be therefore set equal to $\vec{j}^{in}$. In order to compute $\rho^{in}$, we exploit the same idea as at the reconstruction step in steps 240 and 250 of figure 5 and as shown in figure 6, respectively: all populations are expressed in a form of first order Chapman-Enskog expansion where velocity is set equal to its inlet value. Known populations, arriving at the inlet from the bulk, are used to derive unknown quantities. In particular, when the velocity derivatives at inlet are negligible (e.g., constant profile) and continuity condition (28) is assumed, $\varepsilon N_i^{(1)}$ (14) becomes:

$$\varepsilon N_i^{(1)} = \frac{1}{\lambda_\psi} \frac{\partial \rho}{\partial \beta} u_\alpha^{in} Q_{i\alpha\beta} \quad , \quad i \in \{0,...,b_m\}. \tag{60}$$

Assuming an approximately hydrostatic (linear) pressure distribution at inlet $c_s^2 \partial \rho / \partial z \approx \rho_0 g$, the populations take a form

$$N_i = \rho B_i + b_i, \text{ where } B_i = N_i^{eq.}\left(\rho = 1, \vec{u} = \vec{U}^{in}\right), b_i = \frac{\rho_0 g}{c_s^2} \frac{1}{\lambda_\psi} v_\alpha^{in} Q_{i\alpha z} - \frac{1}{2}\rho_0 g C_{iz.} \tag{61}$$

where g is the acceleration due to gravity, $\rho_0$ is mean density of the fluid in case of gas, and the physical density of the fluid in case of liquid.

Computing a sum of known populations $\Sigma_{i \in I^+} N_i^+$, we write then equation (49) for density:

$$\rho = \frac{\Sigma_{i \in I^+} N_i^+ + \Sigma_{i \in I^-} b_i}{1 - \Sigma_{i \in I^-} B_i}. \tag{62}$$

When $\rho$ is computed, incoming populations are imposed in a form (61). In case of not uniform inlet profile, the same approach has to include the first and, if necessary, second order momentum derivatives into Chapman-Enskog expansion for inlet populations.

The above described computation according to the embodiment of figures 4 to 7 was applied to simulate filling processes. Before starting the initialization of the quantities and the populations as described with respect to steps 150 to 170 a scaling step is performed which is based on the equality of the Reynolds number *Re* and Froude number *Fr* to those of the experiment (see (29)). Magnitude of inlet LB velocity $U^{lb}$, with $U^{lb} = \left\|\vec{U}^{in}\right\|$, determines the scaling factor between the LB and the physical velocities. Characteristic length *L* is set equal to some inlet distance. Consider some regular grid which covers the computational domain. Let the number of its liquid cells be equal to $V$ and their number at inlet be S. Number of the LB time steps to fill the box is $T^{filllb} = V/(SU^{lb})$. Since the computational time is inverse proportional to $U^{lb}$, one has interest to keep it as high as possible. On the other side, the conditions $U^{lb} < 1$ and $U^{lb} < c_s$ should meet. Moreover, $M^2 = U^{lb2}/c_s^2$ should be small enough to avoid high compressibility error. For instance, in case when nearly hydrostatic regime $\nabla P' \approx Fr^{-1}$ is attained in a box of a height H, the density difference between the top and the bottom is about $\rho_0/c_s^2 g^{lb} H$. When physical velocity increases in I times but the same inlet velocity is used in different LB simulations, $g^{lb}$ and density variation $\rho - \rho_0$ decreases as $I^2$. So far, simulations corresponding to high physical velocities are easier for the method from the point of view of the compressibility effects caused by the gravitation.

In simulations below, we mostly use $U^{lb} \leq 0.1$ and $c_s^2 = 1/3$, i.e. $M^2 < 0.3$ at inlet, at least. It can be proved, that the minimal stable viscosity value $\nu^{min}$ increases with $U^{lb}$. When $U^{lb} = 0.1$, the LB method without free interface approaches its stability boundary somewhere at $\tau^{min} \approx 0.5078$ in $32^2$ and $64^2$ periodic boxes. In case of simulations with free interface and $U^{lb} \approx 0.1$, we detect loss of stability at approximately these values, i.e. at moderate Reynolds numbers ($Re \approx 300\text{-}500$ for typical inlet length $L^{lb} \approx 10Lu$). The development of instabilities manifests itself, for example, in appearance of a large number of negative populations after the reconstruction. In fact, local velocities overhead the inlet velocity several times in real-life simulations. The non-linearity of the flow and the presence of free boundary can displace the stability bounds to greater viscosity values as well.

When the grid is refined by a factor $n$, i.e. $V \rightarrow n^3 V$, $S \rightarrow n^2 S$, and $U^{lb}$ is reduced by a factor k, $k \geq 1$, $T^{fill\ lb}$ increases as n x k times and the total computational efforts increase accordingly by a factor about $n^3$ x n x k. Since Mach number decreases as $k^2$, one should not expect decreasing of the compressibility effects when k = 1 even if the grid is refined. The stability should improve, however, since $\nu^{lb}$ increases by a factor n/k. In reality, $\nu^{lb}$ should take so small values for high Reynolds number simulations that it appears to be unpractical to improve the stability only with a help of the refining procedure. In order to analyze the problem, two approaches have been investigated. First one is to study different reconstruction strategies, including higher order extrapolations, iteratively improved linearizations, explicit /implicit time approximations, etc. In spite of some improving, no principal gain in stability was attained unless some quantity of numerical diffusion was introduced into the scheme. This represents a second approach to stabilize the LB method in bulk.

So far three possibilities have been first explored. As a first (explicit upwind) approach we add numerical diffusion explicitly as shown in the following. In the next approach, in order to reduce crosswind diffusion of such an explicit upwind scheme in multi-dimensions, we represent the equilibrium function of the LB equation in such a form that derived macroscopic equations may include different corrections to diffusion tensor. LB analogs of full upwind scheme, streamline type upwind, etc. have been introduced. As a last possibility to dump the small-scale fluctuations, the simplest turbulent model was considered: $\nu \rightarrow \nu + \nu_T$, $\nu_T = C_s^2 ||D||$. An intrinsic locality of the LB method is maintained in almost all new schemes since all components of strain-rate tensor $D$ are derived from non-equilibrium part of the population solution. When a spectrum of global evolution operator is improved as in case of first and third approaches, the LB method becomes robust and stable. Explicit upwind scheme is found to be the most robust in free interface simulations. Robustness means here that very different realistic problems can be modeled using nearly equal upwind parameters without loss of stability.

In the following, the explicit upwind scheme mentioned before is discussed. In this approach, we adjust locally $\lambda_\psi$, so that $\nu$ becomes equal to $\nu^{eff}$:

$$\nu^{eff} = \nu + \nu^{num}, \quad \nu^{num} = \nu \times F(Pe), \quad F(Pe) = C \times Pe \times f(Pe), \quad Pe = \frac{||U||h}{2\nu}. \tag{63}$$

where $\nu$ is kinematic viscosity, $\nu^{eff}$ is effective viscosity, $\nu^{num}$ is numerical diffusion, $f$ is a function to be defined below, and h is the space step.

Here, the local Peclet number $Pe$ (or grid Reynolds number) controls the quantity of the numerical diffusion; $||U||$ is magnitude of local velocity; space step h is equal to 1 Lu; C is some free parameter. In order to reduce $\nu^{num}$ at least at small and intermediate $Pe$ numbers, we introduce modified critical approximation:

$$f(Pe) = 0, Pe < Pe^{crit}, \text{ and } f(Pe) = \left(1 - \frac{Pe^{crit}}{Pe}\right), Pe > Pe^{crit}. \tag{64}$$

We assume here, that an estimation obtained from the stability analysis for maximal stable Peclet number $Pe^{max}$ enables us to fix $Pe^{crit}$ value, $Pe^{crit.} < Pe^{max}$. Let $\nu^{crit}(||U||)$ corresponds locally to $Pe^{crit}$: $\nu^{crit} = ||U||h/2Pe^{crit.}$. Then we can rewrite relations (63), (64) as

$$\nu^{num}(\nu) = 0, \quad \nu^{eff}(\nu) = \nu, \qquad\qquad if \quad \nu > \nu^{crit.}.$$

$$\nu^{num}(\nu) = (\nu^{crit.} - \nu)[C \times Pe^{crit.}], \qquad and$$

$$\nu^{eff}(\nu) = [C \times Pe^{crit.}]\nu^{crit.} + [1 - C \times Pe^{crit.}]\nu, \quad if \quad \nu < \nu^{crit.}. \qquad (65)$$

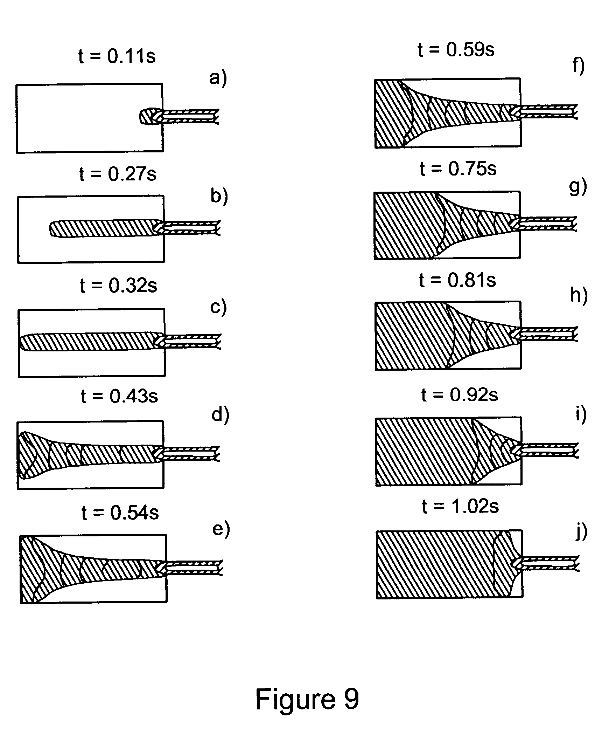

Relation (65) means that numerical diffusion manifests itself only when the kinematic viscosity is less than critical viscosity value $\nu^{crit}$ at a given velocity. Effective viscosity is represented as a linear combination of $\nu^{crit}$ and $\nu$. Its magnitude depends on a product of two values: $Pe^{crit}$ and $C$. This is depicted in figures 8a, 8b and 8c in which, in form of a sketch, the dependency between $\nu$ and $\nu^{crit.}$ is illustrated. The x-axis of the sketch corresponds to $\nu^{crit.}$ and the y-axis thereof corresponds to $\chi = C \times Pe^{crit.}\nu^{crit.}$. Hatched and cross hatched areas or subdomains in the sketch correspond to action of the numerical diffusion.

Figure 8a corresponds to a case (case 1) where $C \times Pe^{crit.} = 1$. Then $\nu^{eff} \equiv \nu^{crit.}$. When $Pe_1^{crit.}, Pe_2^{crit.}$ and $C_1, C_2$ are chosen so that $Pe_1^{crit.} > Pe_2^{crit.}, Pe_1^{crit.}C_1 = Pe_2^{crit.}C_2$, then $\nu_1^{crit.} < \nu_2^{crit.}$ and $\nu_1^{eff} < \nu_2^{eff}$.

Figure 8b corresponds to a case (case 2) where C-value is fixed. If $Pe^{crit.}$ varies, so that $Pe_1^{crit.} > Pe_2^{crit.}$, and $C_1 = C_2$, then $\nu^{crit.}_1 < \nu^{crit.}_2$, $\nu^{num}_1 < \nu^{num}_2$ and $\nu_1^{eff} < \nu_2^{eff}$.

Figure 8c corresponds to a case (case 3) where $Pe^{crit.}$-value is fixed. If C varies, so that $Pe_1^{crit.} = Pe_2^{crit.}$ and $C_1 < C_2$, then also $\nu_1^{crit.} = \nu_2^{crit.}$, $\nu_1^{num} < \nu_2^{num}$ and $\nu_1^{eff} < \nu_2^{eff.}$

We studied results obtained with a help of explicit upwind scheme in case of one phase examples (1D convection-diffusion, driven cavity) and benchmark free interface simulations. Based on these results, we conjecture that the choice $Pe^{crit.} = D$ and $C = 1/D$ is close to limit of the admissible numerical diffusion on fine enough grids.

In the following, the results of filling simulations in 2D cavity with expansion 1 : 5 are presented, one of these simulations being shown in figures 9a to 9j, wherein $Re$ was 2, the velocity magnitude distribution is shown by lines of constant velocity, the physical data was $U^{exp.in} = 100$cm/s, $\nu^{exp} = 0.1$m²/s, $T^{fill\ exp.} = 1.08$s, $L^{exp.} = 2$cm, $\vec{g} = 0$, the grid consisted of 86240 liquid cells, and LB values were $U^{lb} = 0.1/16$, $\nu^{lb} = 1.25$, $\tau = 4.25$, $L^{lb} = 40$, $T^{fill\ lb} = 344960$, and no-slip boundary conditions and magic collision (24.1) used. Inlet section is 2cm x 7.8cm, the cavity is 10cm x 20cm. We performed simulations with varying $Re$ with viscosity. No special efforts to maintain the symmetry was performed. Figures 9a to 9j show the simulation result at some time steps t being obtained with $Re = 2$. Other simulations were performed with $Re = 0.2, 2, 50$, and 500, respectively. In whole, filling patterns are in agreement with the theoretical and the numerical analysis. At $Re = 0.2$, the "mound filling" were observed. At $Re = 2$, the filling behavior is changed and "disk pattern" develops, as can be seen in Fig. 9a - 9j. Relatively small LB velocities are used in both cases in order to decrease LB viscosities in order to improve an accuracy of boundary conditions. At intermediate and high $Re$, when inertia dominates, filling patterns change drastically and so called "shell" type filling were obtained at $Re = 50$ and $Re = 500$. At $Re = 50$, viscous boundary layers were rather thick. At $Re = 500$, the boundary patterns were much thinner and they developed almost parallel to adjacent wall, in accordance to the analysis of inviscid flow. Similar solution are obtained at $Re > 500$, when we use explicit upwind scheme (65) with C = 1 and $Pe^{crit} = 1$. When this scheme is applied in case $Re = 50$, no influence on the solution is detected since the actual $Pe$-numbers are less than $Pe^{crit.}$. We conclude then that for chosen parameters of the upwind scheme, the quantity of the numerical diffusion is acceptable. We note, however, that some thickening appears and continues to travel with the fluid when the boundary flux drains into the inlet column. We conjecture that this is related to coupling of the populations which cary fast and slow, relatively, momentum values at interface cells. This effect is seen less at coarse grids discussed below. Although increasing of the numerical diffusion helps to improve solution in this point, the problem of loss of the smoothness in this moment needs further investigation.

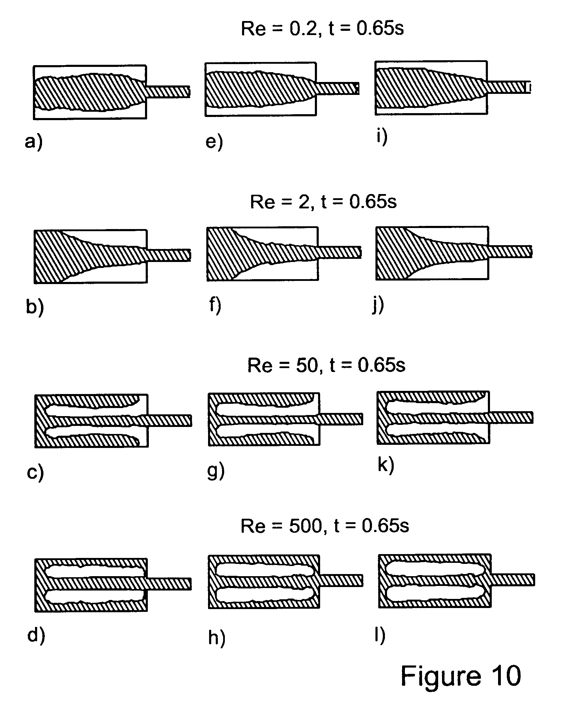

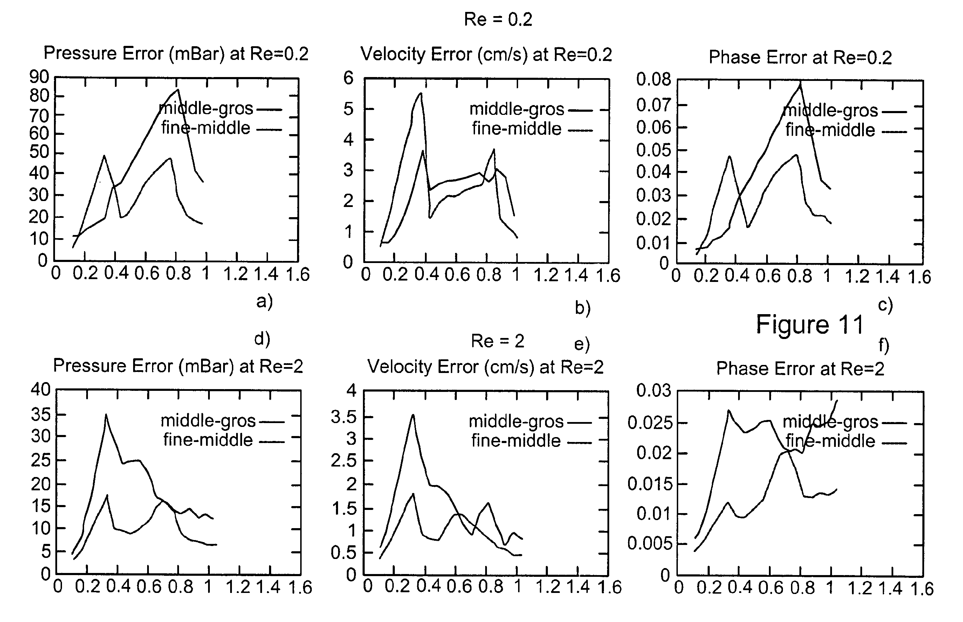

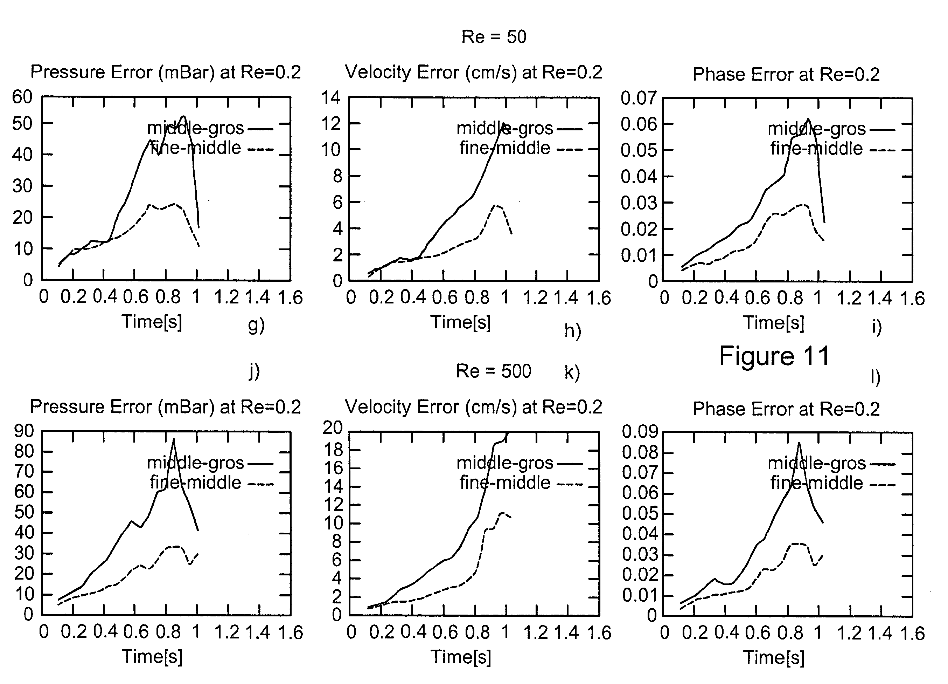

Convergence behavior of the simulation in accordance to the above described embodiment with respect to space resolution was checked by considering three consequently refined grids. In so far, the solutions of figures 9a to 9j correspond to finest grid of the sequence. The results obtained by varying the grid resolution is displayed in figures 10a to 10l, wherein figures 10a to 10d (left column) correspond to simulation results at time 0,65s, obtained by use of the coarst grid and for different Reynold numbers, figures 10e to 10h (middle column) correspond to simulation results at the same time step, ontained by use of intermediate grid and for different Reynold numbers, and figures 10i to 10l (right column) correspond to simulation results at the same time step, obtained by use of the finest grid and for different Reynold numbers, and figures 10a 10e, 10i correspond to a simulation with $Re = 0.2$, figures 10b, 10f, 10j correspond to a simulation with $Re = 2$, figures 10c, 10g, 10k correspond to a simulation with $Re = 50$, and figures 10d, 10h, 101 correspond to a simulation with $Re = 500$. At given $Re$ number, equal inlet velocities were used for simulations at every grid. When velocities are equal, the CFL (CFL $= U^{lb}\Delta T^{lb}/\Delta x^{lb}$, $\Delta T^{lb}=1$, $\Delta x^{lb} = 1$) holds the constant value and the value of time step in physical units decreases together with the space step when the grid is refined. Figure 11a to 111 display pointwise difference between the solution obtained on the grid with step 2h and its projection from the finer grid, measured in $L_1$ norm. The results are given along the y-axis for pressure (mBar) (in Fig. 11a,d,g,j), velocity (cm/s) (in Fig. 11b,e,h,k) and variable $\rho_f/\rho$ (in Fig. 11c,f,l,l). Table 2 displays the corresponding convergence rates $L_{h,2h}/L_{2h,4h}$, $L_{h,2h} = \sum_m \|f_h(t) - f_{2h}(t)\|$, f $= \{P, \|U\|, . \rho_f/\rho\}$. The error is measured each 5% of filling time. Projection is set equal to an arithmetical mean of the four fine cells lying inside one coarse cell. The solution is put equal to zero in non-filled cells.

Table 2

|  | Pressure (mBar) | $\|U\|$ (cm/s) | $\rho_f/\rho$ |
|---|---|---|---|
| $Re = 0.2$ | 1295.9/553.4 | 49.44/41.7 | 0.705/0.51 |
| $Re = 2$ | 330.7/180.4 | 28.45/16.5 | 0.39/0.22 |
| $Re = 50$ | 496.9/282.5 | 89.6/48.6 | 0.57/0.33 |
| $Re = 500$ | 654.68/311.5 | 144.1/69.09 | 0.98/0.36 |

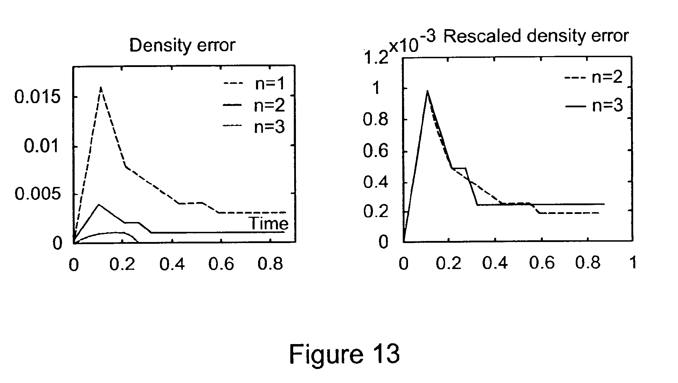

The results for convergence rates reflect quite well main features of the above described computation procedure. First, only first order convergence is observed. In fact, although second order convergence is maintained in bulk, we can not expect effective second order behavior from used here boundary conditions at solid walls. Also, advection scheme and calculations of the normal are only of first order. So, even if second order accuracy is met by Chapman-Enskog expansion at interface in 2D case, where no tangential derivatives are neglected, it is deteriorated by other components of the solution. Second, the difference between the solutions obtained on three grids is smaller for "simplest" Reynolds numbers, $Re = 2$ and $Re = 50$. At $Re = 0.2$, i.e. at high $\tau$ values ($\tau > 1$), the difference between solutions at stagnation point is quite significant. We relate this to inaccuracy of the boundary conditions which grows together with $\nu$. While using different $\tau$ values but equal velocities in all grids, error norm becomes a bit more significant, but the solution in stagnation point stays qualitatively the same. In case $Re = 500$, if the same upwind scheme at every grid ($Pe^{crit.} = 1$, C = 1) are used, numerical diffusion at coarse grids becomes excessive. This can be understood from the relation (65): since $Pe^{crit.}$ and $U^{lb}$ values are equal at all grids, $\nu^{crit}$ values are also close between them, whereas the imposed viscosity values $\nu$ increases with the refining. This implies higher $\nu^{num}$ values at smaller $\nu$ values, i.e. at coarse grids. One could assume then that the parameter C should be reduced together with $\nu$. Figures 10d, 10h, and 101 (bottom) correspond to decreasing C values (C = 1/4, 1/2, 1), from coarse to finer grids. The results improve then in accordance with our predictions. Compressibility study is performed in the case $Re = 2$ when inlet velocities varies: $U^{lb} = 0.1 \times 2^{-n}$, n = 0, 1, 2, 3, 4. In two first cases, i.e at high $\tau$ values ($\tau = \{7.5, 3.5\}$), the solution is neither accurate no stable. In three other cases, we compute mean density value $\rho(t)$ over all active points and compare it with the reference value $\rho_0$. In Fig. 13a, obtained results for $\delta\rho$ value are plotted along y-axis, $\delta\rho = (\rho - \rho_0)$, wherein x-axis corresponds to time in seconds. In order to check if $\delta\rho(n)$ scales as $\|U\|^{2n}$, we rescale $\delta\rho$ with respect to $\delta\rho(n = 4)$. Figure 13b displays $\delta_\rho s$ values along y-axis, $\delta_\rho s = (\rho - \rho_0) \times 4^{4-n}$, wherein x-axis corresponds to time in seconds. When n = 4, $U^{lb} = 0.1/2^4$, $M^2 \approx 1.2 \times 10^{-4}$, $\delta\rho \approx 0$, i.e. incompressible regime is practically reached. After rescaling, density deviations $\delta_\rho s$ (n) approaches to zero, similar as the results for n = 4. This confirms that the compressibility errors scales as $M^2$ in according with the theoretical predictions.

In 3D case we studied the influence of Reynolds ($Re$), Froude ($Fr$) and Mach ($M$) numbers on the solution. Similar results were obtained by using both linearizations discussed with regard to the reconstruction of figure 6. We tested the method in benchmark simulations, wherein Hammer box, Campbell box and Sheffield box are considered. Influence of inlet velocity on the compressibility in "Motorblock" simulations were also investigated. Since very high $Re$ numbers are modeled, free-slip boundary conditions were used until specially indicated. No-slip boundary conditions correspond to high local velocities in narrow channels and lead to further increasing of the compressibility. Compressibility is controlled by deviation of the obtained filling state in time from the exact solution. In benchmark simulations below, this error lies within 5%. Filled volume is computed as a sum of value $\rho_f/\rho$. The number of active points should be close to filled volume value, otherwise a number of not fully filled cells is too excessive.

Regular computational grids used here include from $10^5$ to $2 \times 10^6$ liquid cells. The code is parallelized, for example, by using a dynamical load balance strategy, or some other parallelization method. Since the non-local operations (compared with one phase LB method) are concentrated in interface cells only (e.g. calcul of normal vectors, advection of fluid mass, extrapolations), the method keeps its advantages for parallelization.

Figures 12a to 12f show pressure fields during mold filling simulations of steel hammer head casting at $Re=53417$, $Fr = 5.1$, wherein the pressure distribution is shown by lines of constant pressure in figure 12f, the physical data is $U^{exp.in}$ = 122.859cm/s, $v^{exp}$ = 6.9 x $10^{-7}$m$^2$/s, $T^{fill\ exp.}$ = 15s, $L^{exp.}$ = 3cm, the grid consisted of 110573 liquid cells, and the LB values are $U^{lb}$ = 0.1, $v^{lb}$ = 1.1 x $10^{-5}$, $\tau$ = 0.500034, $L^{lb}$ = 6, $T^{fill\ lb}$ = 36858. LB simulations at $U^{lb}$ = 0.1 were done with explicit upwind scheme (65), where $Pe^{crit.}$ = 3 and C = 1/3. The filling sequence agrees quite well with the other results. The stream reaches first the right wall at a the point which lies approximately at a height equal to 2/3 of the distance between the runner 300 and the bottom 310 as indicated at 320 in figure 12b. The jet of failing steel attains the velocity 250 - 260cm/s, then it slows down at the bottom 310 and raises slow into the casting box indicated by 330. During the rise, the pressure reaches the hydrostatic distribution as can be seen in figure 12f. When the numerical diffusion increases and viscous/gravitation effects prevail over the inertia, the stream can come into the runner and fall down. In so far, this test can be used as a measure of the effective Reynolds numbers. Also, because of very small LB viscosity values used in this experiment, local $Pe$ numbers take mostly high values. Indeed, $Pe^{crit.}$ = 3 corresponds to $\|U^{lb}\|$ = 7 $\times$ $10^{-5}$ in this experiment. One can assume that numerical diffusion can be switched on at higher $Pe^{crit.}$ numbers. For instance, the results at $Pe^{crit.}$ = 150, C = 1/3 (i.e. $\tau^{crit.}$ = 0.501 if $\|U^{lb}\|$ = 0.1) are still similar to those presented above. On the other hand, the stabilization is not strong enough when $Pe^{crit.}$ = $10^3$ (i.e. $\tau^{crit.}_{\|U\|=0.1}$ = 0.50015) is used. This agrees with $\tau^{min}$ values mentioned above. An analysis of the computation embodiment of figures 4 to 7 is applied to example of figure 12. We plot in Fig. 14a the number of interface points during the filling along y-axis, wherein x-axis corresponds to time in seconds. Figures 14b-14d display the number of points where at least one unfavorable situation mentioned at caption happens. In particular, figure 14b shows the number equations m less than the number of unknown variables n, figure 14c shows the number of cells where the number of equations m is greater than or equal to the number of variables n (m $\geq$ n), but where the linear system is linear, and figure 14c shows the number of cells where negative populations appear after the reconstruction. The number of "bad" cases is negligible compared with the total number of points where the reconstruction takes place. Extrapolations of populations from neighboring successful cells are performed when situations corresponding to figures 14b), c) or d) happen. Figures 14e-14f display, along y-axis, the number of such points, wherein x-axis corresponds to time in seconds. In particular, figure 14e shows the number of I-cells where interpolations of unknown populations are needed, and figure 14f shows the number of N-cells where interpolations of unknown populations are needed. If no such a neighbor is found, the point is deactivated. The total number of deactivated nodes over the whole period of filling is equal to 6 in this example. Note that the number of interface points is of order of several thousands at each time step. No negative population after collision appears. This is due to the stabilizing scheme; otherwise the number of negative populations after the reconstruction and after the collision increase drastically when $\tau$ approaches its limit $\tau$ = 0.5.

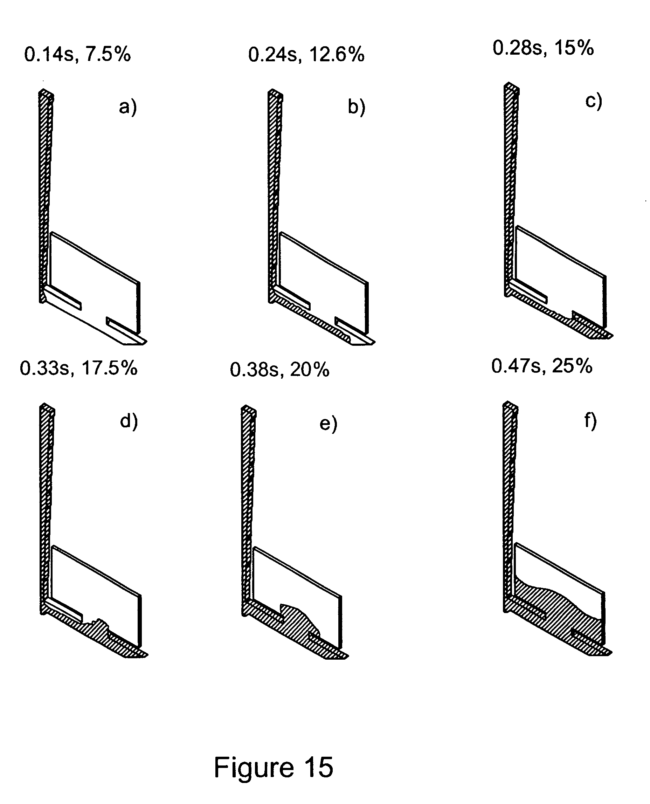

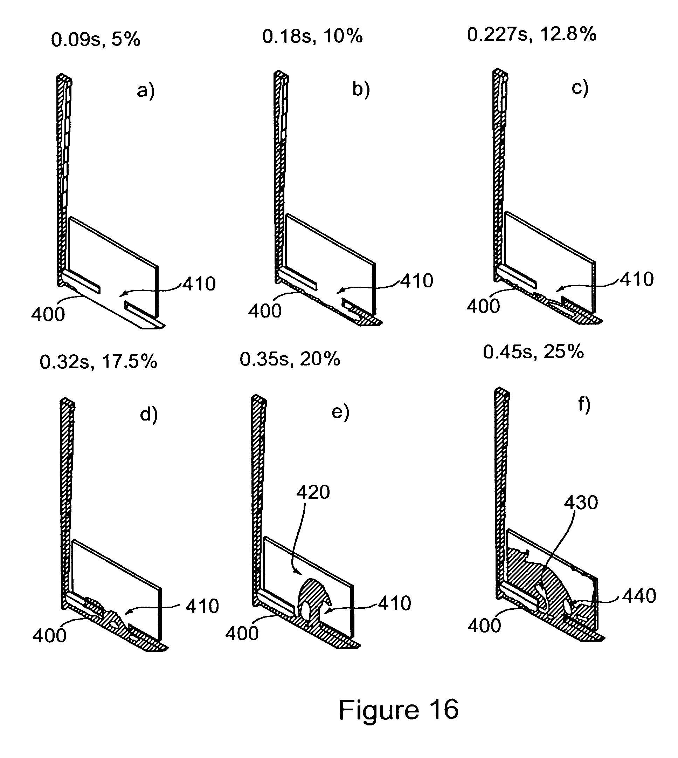

Figures 15a to 15f and 16a to 16f show filling states at different times t during filling in a Campbell box, wherein, in figure 15, $Fr$ = 5.56 and $Re$ = 3.2, the physical data is $U^{exp.in}$ = 88.6cm/s, $v^{exp.}$ = 4 x $10^{-3}$m$^2$/s, $T^{fill\ exp.}$ = 1.88s, $L^{exp.}$ = 1.44cm, the grid consisted of 216546 liquid cells, the LB values are $U^{lb}$ = 0.0125, $v^{lb}$ = 0.047, $\tau$ = 0.641, $L^{lb}$ = 12, $T^{fill\ lb}$ = 111049, and the free-slip boundary conditions were used, and in figure 16, $Fr$ = 5.965 and $Re$ = 160, the physical data is $U^{exp.in}$ = 91.75cm/s, $v^{exp.}$ = 8 x $10^{-5}$m$^2$/s, $T^{fill\ exp.}$ = 1.88s, $L^{exp.}$ = 1.44cm, the grid consisted of 216546 liquid cells, the LB values are $U^{lb}$ = 0.05, $v^{lb}$ = 0.047, $\tau$ = 0.641, $L^{lb}$ = 12, $T^{fill\ lb}$ = 27762, and the free-slip boundary conditions were used. We model the mold casting by using constant inlet velocity which corresponds approximately to prescribed filling time. Simulation results at $Re$ = 3 are shown in figures 15a to 15f. They agree well with the polymer flow predictions. Filling sequence at $Re$ $\approx$ 165 is shown in figures 16a to 16f. Here, the sprue develops fast along the bottom of the runner 400, then impacts to the nearest side of the gate 410 and expands first to the left as indicated by 420. Then the sprue fountains quickly to the right. Later, two vortices 430, 440 appear on the either side of the main filling stream. In this way, the simulations reproduce the main features of the experimental results. Note that kinematic viscosity of the aluminum (and hence $Re$ number) is reduced here, since no turbulent modeling is used in these simulations.

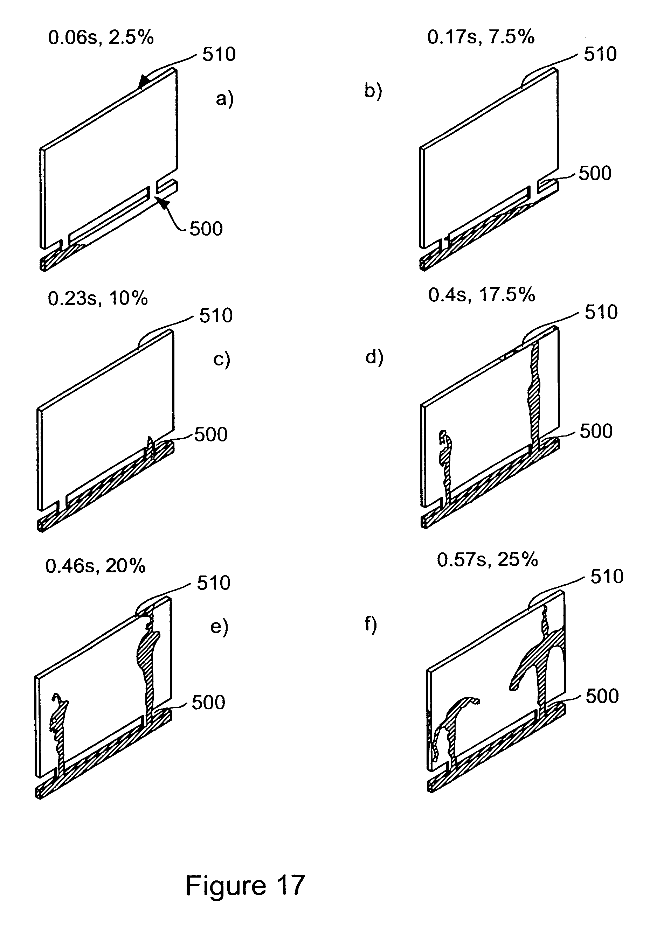

Figures 17a to 17f show filling states at different times t during filling in a Sheffield box at $Re$ = 24717, $Fr$ = 10.7, wherein physical data are $U^{exp.in}$ = 145cm/s, $v^{exp}$ =1.1733x$10^{-6}$m$^2$/s, $T^{fill\ exp.}$ = 2.31s, $L^{exp.}$ = 2cm, the grid consisted of 1270420 liquid cells, the LB values are $U^{lb}$ = 0.1, $v^{lb}$ = 8.1 x $10^{-5}$, $\tau$ = 0.500243, $L^{lb}$ = 20, $T^{fill\ lb}$ = 33432, and free-slip boundary conditions were used. The simulation parameters correspond to physical parameters of water. Flow comes from left to right and the variation in inlet velocity results in different values of maximal height of the jet column in the right gate 500. Our results at inlet velocities $U^{exp.in}$ = 80cm/s, 95cm/s, 105cm/s, 145cm/s agree well with the available experimental data. For all inlet velocities, we used the same upwind parameters: $Pe^{crit.}$ = 3, C = 1/3. When C increases to 1, however, water jet does not reach the top wall 510 at $U^{in}$ = 145cm/s, indicating that the gravitation and viscous forces dominate over the convective ones. Similar to the jet behavior in the Hammer box, this test provides us a good indicator of the excessive numerical diffusion.

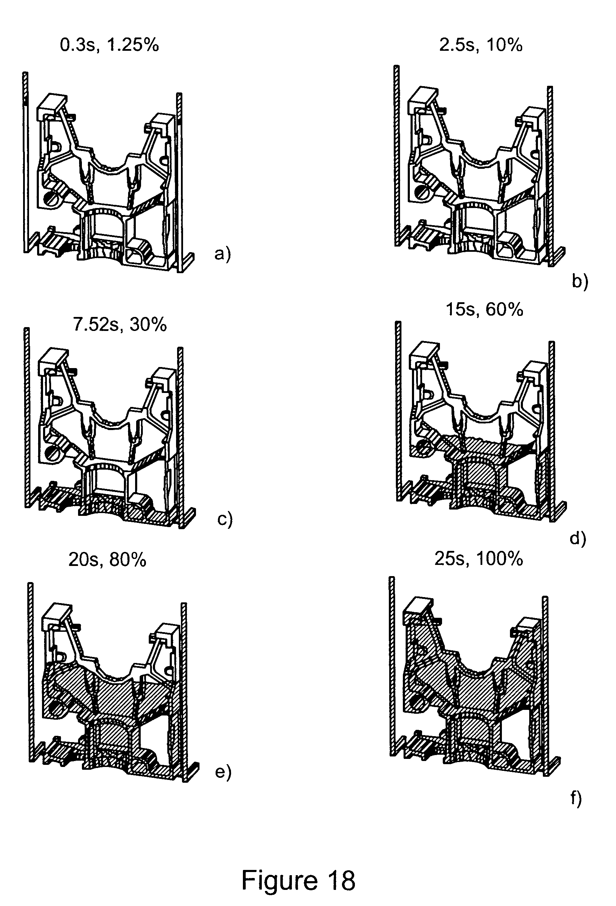

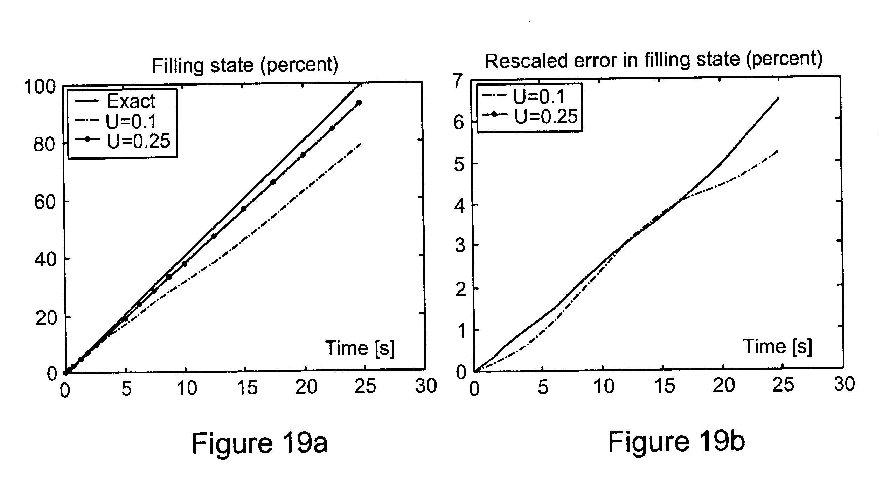

A filling sequence in "Motorblock" at $Re$ = 26507, $Fr$ = 2.36 is shown in Fig. 18, wherein physical data $U^{exp.in}$ = 83.232cm/s, $v^{exp.}$ = 9.42 x $10^{-6}$m$^2$/s, $T^{fill\ exp.}$ = 30.0757s, $L^{exp.}$ = 3cm, the grid consisted of 625817 liquid cells, LB values are $U^{lb}$ = 0.1, $v^{lb}$ = 6.0 x $10^{-6}$, $\tau$ = 0.500017, $L^{lb}$ = 6, $T^{fill\ lb}$ = 200261, and free-slip boundary conditions were used. The results are obtained with strong upwind parameters $Pe^{crit.}$ = 1 and C = 1. High compressibility in narrow channels is not negligible when the same inlet velocity ($U^{lb}$ = 0.1) as in Hammer and Sheffield boxes is used here. It causes, in particular, a quite noticeable delay in filling time. Obtained values (in percent to full stand) are plotted along y-axis as a function of time (x-axis) in Fig. 19a for $U^{lb}$ = 0.1 and $U^{lb}$ = 0.025. Figure 19b displays an error in fill state divided by factor 4 for $U^{lb}$ = 0.1. Since the both solution meet we have to conclude that the error in filling time scales here with $M$ and not with $M^2$.

The specific embodiment described above represents a general approach to free interface Lattice Boltzmann method. This approach is based on a first-order Chapman-Enskog expansion of the population at interface nodes. Boundary conditions at curvelined interfaces are exactly met by the coefficients of the series. Interface advection is performed with help of locally mass conserving and anti-diffusive recoloring algorithm. Since no stage of the algorithm involves geometrical interface constructions, the method is robust to any interface topology and can be regarded as a surface capturing method. In bulk, second order LB accuracy in space is maintained. At solid boundaries, actual accuracy of local reflexions is something between first and second order. Boundary method can be incorporated for further improvings. At the interface, formal second order accuracy is kept by the expansion. Least square minimization procedure could bring second order improvement of the normal calculations on regular grid. In so far, locality of its main operations and linear increase of the computational efforts with space refining are advantageous for realistic calculations. Since no complicated discretization/advection/solution procedure is need, the method of the above embodiment can be easily implemented by the LB users and novices. First-order Chapman-Enskog expansion of the populations, which contains in itself all components of the strain tensor, allows local and simple incorporation of viscoelastic effects into the model.

The Lattice Boltzmann frame of this embodiment followed an approach where collision operator is employed in a form of the projection on basis vectors in momentum space. We represented the basis vectors in a unique form, suitable for any DdQq model. In the above description, the method is worked out using D2Q9 and D3Q15 Models as 2D and 3D examples, but other choices are possible as well. Boundary conditions are imposed with help of local reflexions. Since an effective accuracy of bounce-back and specular reflexions to model no-slip/freeslip boundary conditions (or their combination) depends on the actual choice of all eigenvalues of the collision operator, a special attention was paid to this problem. Similar to any LB model, a deficiency of the method manifests itself in the development of instabilities at high Reynolds numbers, even if the influence of the free eigenvalues on the stability is took into account. This focused us on the design of the stabilizing schemes. In so far, explicit upwind LB, full-upwind, streamline-type multi-dimensional upwind schemes, etc-, have been introduced for the LB models. In the foregoing simulations, the most rough but robust explicit upwind approach was used for free interface simulations at high $Re$ numbers.

It is noted that Equation (6) is formulated in terms of the normalized basis vectors in order to simplify the notations. It is much more numerically efficient to represent basis vectors as the vectors with integer components, say $\vec{e}_k^{\,int}$. This enables us to compute easily all equal linear combinations which come into projection $\phi_k = 1/\left\|\vec{e}_k^{\,int}\right\|^2 \times (\vec{N}, \vec{e}_k^{\,int})$ and into the decomposition: $\Sigma_k \phi_k \vec{e}_k^{\,int}$. Moreover, computing the generalized collision (6) does not require the evaluation of equilibrium function in a form (10). One can represent it in a form of equilibrium projection-The collision reads then

$$\tilde{N}_i\left(\vec{r},t\right) = N_i\left(\vec{r},t\right) + \sum_{k=0}^{b_m} \lambda_k \left\{ \left(\vec{N},\vec{e}_k\right) - \left(\vec{N}^{eq.},\vec{e}_k\right) \right\} e_{ki}. \qquad (66)$$

Since $(\vec{N}^{eq},\vec{e}_k)$ can be computed analytically (see (20) and (23)), the computational efforts reduce drastically (at least at factor two). Nevertheless, when the equilibrium is computed for some other purpose, first order collision is relatively fast. A particular fastest choice $\lambda_k = -1$ may be employed. In case of convergence to stationary state, however, one should take in mind, that this choice is not the fast one in the sense of relaxation.

Thus, the present invention may be employed for any computations and simulations of flow actions with free interface in two or three dimensions in any geometrical area of interest, and for any fluids, gases or liquids. Possible liquids comprise oils, foods, water etc. Possible application fields comprise injection molding, filling in receptacles, especially in food industries, oil industries and chemical engineering, and applications in environmental industries, i. e. hydrology of waters and channel systems etc.

## Claims

1. Method for computing an interface of a fluid in a space, the space being represented by a grid having cells, comprising the following steps: .

providing (10; 150, 160, 170), for a current time step, a quantity of the fluid in a cell and populations of the fluid in the cell, wherein each population has associated therewith a fluid moving in a direction from a predefined set of directions, wherein all populations for all directions of the predetermined set of directions in the cell sum up to a density in the cell, and the quantity of the fluid in the cell lies between zero and the density;

computing (20; 180), for a subsequent time step, the quantity of the fluid in the cell based upon the populations of the fluid in surrounding cells from the current time step which are associated with directions directed into the cell;

determining (30; 190) at least one population of the cell for the subsequent time step by propagating the populations from the current time step of the fluid from the surrounding cells into the cell; and

calculating (40; 240) remaining populations of the cell, which have not been determined by the step of determining, by means of the following substeps:

deriving (50; 310) an extrapolated macroscopic velocity value of the fluid for the cell for the subsequent time step by extrapolating a macroscopic velocity value from a preceding time step and/or surrounding cells;

computing (60; 320) coefficients describing the relation between the populations for the cell and the actual macroscopic density and the actual macroscopic momentum for the cell, by developing the relation between populations on the one hand and space and time on the other hand around an equilibrium condition, and by using the extrapolated macroscopic velocity value;

computing (70; 330) a macroscopic density value and a macroscopic momentum value by using the coefficients and the populations of the cell determined by the step of propagating; and

computing (80; 340) the remaining populations using the macroscopic density value and the macroscopic momentum value and the coefficients whereby all populations for the cell at the interface of the fluid in the space are obtained.

2. Method for computing an interface of a fluid in a space, the space being represented by a grid having cells, comprising the following steps:

providing (10; 150, 160, 170), for a current time step, a quantity of the fluid in at least one of surrounding cells of a cell and populations of the fluid in the at least one of surrounding cells, wherein each population has associated therewith a fluid moving in a direction from a predefined set of directions, wherein all populations for all directions of the predetermined set of directions in the cell sum up to a density in the at least one of surrounding cells, and the quantity of the fluid in the cell lies between zero and the density;

computing (20; 180), for a subsequent time step, the quantity of the fluid in the cell, the quantity of which is zero for the current time step, based upon the population of the fluid in the at least one of surrounding cells from the current time step which is associated with a direction directed into the cell;

determining (30; 190) at least one population of the cell for the subsequent time step by propagating the population from the current time step of the fluid from the at least one surrounding cell into the cell; and

calculating (40; 250) remaining populations of the cell, which have not been determined by the step of determining, by means of the following substeps;

deriving (50; 310) an extrapolated macroscopic velocity value of the fluid for the cell for the subsequent time step by extrapolating a macroscopic velocity value from a preceding time step and/or surrounding cell;

computing (60; 320) coefficients describing the relation between the population for the cell and the actual macroscopic density and the actual macroscopic momentum for the cell, by developing the relation between populations on the one hand and space and time on the other hand around an equilibrium condition, and by using the extrapolated macroscopic velocity value;

computing (70; 330) a macroscopic density value and a macroscopic momentum value by using the coefficients and the populations of the cell determined by propagating; and

computing (80; 340) the remaining populations using the macroscopic density value and the macroscopic momentum value and the coefficients whereby all populations for the cell at the interface of the fluid in the space are obtained.

3. Method according to claim 1, wherein the step of calculating (40; 240) remaining populations of the cell is performed for all cells of the grid where the quantity in the subsequent time step is non-zero, and into which at least one population has been propagated from the surrounding cells.

4. Method according to claim 2, wherein the step of calculating (40; 250) remaining populations of the cell is performed for all cells of the grid, where the quantity in the subsequent time step is non-zero, whereas the quantity in the current time step is zero.

5. Method according to one of claims 1 to 4, wherein the steps of providing (10; 150, 160, 170), computing (20; 180) and determining (30; 190) are performed with respect to all cells where the quantity of the fluid in the current time step is non-zero.

6. Method according to one of claims 1 to 5, further comprising the following step:

consecutively performing (230; 240, 250) a collision in all cells in which the directions of the populations determined by propagating form the entire predetermined set of directions and, after the step of calculating remaining populations of the cell, in the cell, the collision being performed by solving an equation indicating the relation between populations on the one hand and space and time on the other hand.

7. Method according to one of claims 1 to 6, wherein the relation between populations on the on hand and times and space on the other hand is described by a Lattice-Boltzmann equation.

8. Method according to one of claims 1 to 7, wherein the substep of computing coefficients comprises the following step:

using a Chapman-Enskog expansion as a development of a Lattice-Boltzmann equation defining the relation between populations on the one hand and space and time on the other hand around the equilibrium condition.

9. Method according to claim 8, wherein the substep of computing coefficients further comprises the following step:

linearizing the Chapmann-Enskog expansion by use of the extrapolated macroscopic velocity value such that

$$N_i = \Sigma B_{ij} X_j + b_i$$

where $0 < i < b_m - 1$, $1 < j < l$, $b_m$ is the number of directions in the predetermined set of directions minus 1, $N_i$ is the population moving in direction associated with i, $B_{ij}$ and $b_i$ are the coefficients, $X_j$ are, in the case of 2D space, variables for macroscopic density and components of the macroscopic momentum, and, in the case of 3D space, variables for macroscopic density, components of the macroscopic momentum and derivatives of the latter, and $l$ is the number of components in $\vec{X}$.

10. Method according to claim 9, wherein
the predetermined set of directions comprises the zero-vector and, in case of 2D space, the directions leading from a center of a square to the corners and the medians of the square, and, in case of 3D space, the directions leading from a center of a cube to the corners and face-centers of the cube;
wherein the Chapman-Enskog expansion is used in the following form

$$N_i\left(\vec{r},t\right) = N_i^{eq.}\left(\vec{r},t\right) + \varepsilon N_i^{(1)}\left(\vec{r},t\right) \quad with \quad i = 0,...,b_m \, ,$$

wherein

$$N_i^{eq\cdot} = t_p^* \left[ c_s^2 \rho + J_\alpha C_{i\alpha} + \rho \frac{u_\alpha u_\beta}{2} \left( 3 C_{i\alpha} C_{i\beta} - \delta_{\alpha\beta} \right) \right], \quad \vec{u} = \frac{\vec{j}}{\rho}, \quad \vec{J} = \vec{j} - \frac{1}{2}\vec{F},$$

$$\varepsilon N_i^{(1)} = \frac{1}{\lambda_\psi} \frac{\partial j_\alpha}{\partial \beta} Q_{i\alpha\beta} + \frac{1}{\lambda_e} \nabla \cdot \vec{j} E_i^{im}, \quad Q_{i\alpha\beta} = t_p^* \left( C_{i\alpha} C_{i\beta} - \frac{c_i^2}{D} \delta_{\alpha\beta} \right),$$

$$E_i^{im} = t_p^* \left( \frac{c_i^2}{D} - c_s^2 \right), \quad p = \|C_i\|^2, \quad \rho = \sum_{i=0}^{b_m} N_i, \quad \vec{J} = \sum_{i=0}^{b_m} N_i \cdot \vec{C}_i, \quad \left\| \vec{C}_i \right\|^2 = c_i^2,$$

$$\xi = -(\theta - c_s^2)\left( \frac{1}{\lambda_e} + \frac{1}{2} \right), \quad \theta = \frac{D+2}{3D}, \quad v = \frac{1}{3}\left( \frac{1}{\lambda_\psi} - \frac{1}{2} \right)$$

wherein $\alpha,\beta = 1...D$, $\varepsilon$ is perturbation parameter, $D$ is dimension of space, $b_m$ is the number of directions in the predetermined set of directions minus 1, $c_s^2$ is the squared sound velocity, $\rho$ is macroscopic density, $\vec{j}$ is the macroscopic momentum, $\vec{u}$ is macroscopic velocity, $\vec{F}$ is an external force, $C_{i\alpha}$ and $C_{i\beta}$ are components of the velocity $C_i$ of population $N_i$, $v$ is kinematic viscosity, $\xi$ is bulk viscosity, and $t_p^*$ are predefined model parameters.

**11.** Method according to claim 10, wherein the subset of deriving comprises the following step:

extrapolating the macroscopic velocity value and a macroscopic density value in order to obtain the extrapolated macroscopic velocity value and the extrapolated macroscopic density value, from a preceding time step and/or a surrounding cell,

and the step of linearizing comprises:

replacing the non-linear term $\rho u_\alpha u_\beta$ in the first order Chapman-Enskog expansion by a product of the macroscopic momentum value and the extrapolated macroscopic velocity.

**12.** Method according to one of claims 8 to 11, wherein the substep of computing the macroscopic density value and macroscopic momentum value comprises the following step:

if the number of populations of the cell determined by propagating plus 1 is smaller than the number of components of vector $\vec{X}$, extrapolating populations of the cell not being determined by propagating from a preceding time step and/or a surrounding cell.

**13.** Method according to one of claims 8 to 12, wherein the substep of computing (70; 330) the macroscopic density value and the macroscopic momentum value further comprises the following step:

solving a linearized system which is based on equations

$$\sum_j B_{ij} X_j = N_i - b_i, i \in I^+ \quad \text{and} \quad \rho - \sum_{i \in I^-} N_i = \sum_{i \in I^+} N_i,$$

where $I^+$ is the set of indices corresponding to populations being determined by the step of propagating, $I^-$ is the set of indices corresponding to the remaining populations, $\rho$ is the actual macroscopic density, in least-square sense or by use of a single value decomposition method.

**14.** Method according to one of claims 1 to 13, wherein the subsets of computing the coefficients, computing the actual macroscopic density and macroscopic momentum and of computing the remaining populations are iteratively repeated, the macroscopic density value and the macroscopic momentum value obtained in a previous iteration step in the substep of computing the actual macroscopic density and the actual macroscopic momentum, being used, in the next iteration step, for extrapolation.

**15.** Method according to one of claims 1 to 14, wherein the method is applied to a simulation of a filling process of the fluid into a cavity.

**16.** Method according to one of claims 1 to 15, wherein the computational fault increases by $n^{D+1}$, wherein D is the dimension of space, if the grid is refined by n.

**17.** Method according to one of claims 1 to 16, wherein the step of providing (10; 150, 160, 170) comprises the following steps:

Scaling the grid based on experimental or physical Reynold and Froud numbers.

initializing (150) the quantity of fluid in each cell in which the fluid is at the beginning of the simulation;

initializing (160) all populations of all cells based on an initial density and velocity; and

performing (170) a collision on the initialized cells.

**18.** Apparatus for computing an interface of a fluid in a space, the space being represented by a grid having cells, comprising:

means for providing, for a current time step, a quantity of the fluid in a cell and populations of the fluid in the cell, wherein each population has associated therewith a fluid moving in a direction from a predefined set of directions, wherein all populations for all directions of the predetermined set of directions in the cell sum up to a density in the cell, and the quantity of the fluid in the cell lies between zero and the density;

means for computing, for a subsequent time step, the quantity of the fluid in the cell based upon the populations of the fluid in surrounding cells from the current time step which are associated with directions directed into the cell;

means for determining at least one population of the cell for the subsequent time step by propagating the populations from the current time step of the fluid from the surrounding cells into the cell; and

means for calculating remaining populations of the cell, which are not determined by the means for determining, the means for calculating remaining populations comprising

means for deriving an extrapolated macroscopic velocity value of the fluid for the cell for the subsequent time step by extrapolating a macroscopic velocity value from a preceding time step and/or surrounding cells;

means for computing coefficients describing the relation between the populations for the cell and the actual macroscopic density and the actual macroscopic momentum for the cell, by developing the relation between populations on the one hand and space and time on the other hand around an equilibrium condition, and by using the extrapolated macroscopic velocity value;

means for computing a macroscopic density value and a macroscopic momentum value by using the coefficients and the populations of the cell determined by the means for propagating; and

means for computing the remaining populations using the macroscopic density value and the macroscopic momentum value and the coefficients whereby all populations for the cell at the interface of the fluid in the space are obtained.

**19.** Apparatus for computing an interface of a fluid in a space, the space being represented by a grid having cells, comprising:

means for providing, for a current time step, a quantity of the fluid in at least one of surrounding cells of a cell and populations of the fluid in the at least one of surrounding cells, wherein each population has associated therewith a fluid moving in a direction from a predefined set of directions, wherein all populations for all directions of the predetermined set of directions in the cell sum up to a density in the at least one of surrounding cells, and the quantity of the fluid in the cell lies between zero and the density value;

means for computing, for a subsequent time step, the quantity of the fluid in the cell, the quantity of which is zero for the current time step, based upon the population of the fluid in the at least one of surrounding cells from the current time step which is associated with a direction directed into the cell;

means for determining at least one population of the cell for the subsequent time step by propagating the population from the current time step of the fluid from the at least on surrounding cell into the cell; and

means for calculating remaining populations of the cell, which are not determined by the means for determining, the means for calculating remaining populations comprising

means for deriving an extrapolated macroscopic velocity value of the fluid for the cell for the subsequent time step by extrapolating a macroscopic velocity value from a preceding time step and/or surrounding cell;

means for computing coefficients describing the relation between the population for the cell and the actual macroscopic density and the actual macroscopic momentum for the cell, by developing the relation between populations on the one hand and space and time on the other hand around an equilibrium condition, and by using the extrapolated macroscopic velocity value;

means for computing a macroscopic density value and a macroscopic momentum value by using the coefficients and the populations of the cell determined by the means for propagating; and

means for computing the remaining populations using the macroscopic density value and the macroscopic momentum value and the coefficients whereby all populations for the cell at the interface of the fluid in the space are obtained.

**20.** Computer-readable medium having stored thereon a computer program which is executable by an computer, and performs a method according to any of claims 1 to 17.

providing, for a current time step, the quantity of the fluid in a cell and the populations of the fluid in the cell ~10

computing, for a subsequent time step, the quantity of the fluid in the cell ~20

determining populations of the cell for the subsequent time step by propagating the populations from the current time step ~30

calculating remaining populations of the cell ~40

# Figure 1

deriving an extrapolated macroscopic velocity valm of the fluid for the cell for the subsequent time step — 50

computing coefficients describing the relation between the population for the cell and an actual macroscopic density and an actual macroscopie momentum — 60

computing macroscopic density and macroscopic momentum valves by use of the coefficients and the known populations — 70

computing the remaining populations — 80

Figure 2

Fig. 3a

Fig. 3b

Fig. 3c

Fig. 3d

Fig. 3e

Fig. 4a

Fig. 4b

Initialize $\rho_f$ for all cells A(T), T=0 — 150

Initialize $N_I$ for all active cells A(T), T=0 — 160

Perform collision in all active cells A(T), T=0 — 170

Compute quantity $\rho_f(\vec{r}_i, T + 1)$ in all cells — 180

Divide all cells of time step T+1 into active cells A(T+1) and non-active cells. — 190

Propagate populations form A(T) to A(T+1) cells — 200

Classify known and unknown populations in A(T+1)-cells, wherein a population is marked known if $(\vec{r}-\vec{C}_i, T) \in A(T)$ — 210

Divide A(T+1)-cells into B (bulk) /I (interface) / N (new interface) cells — 220

Perform collision in B-cells — 230

Perform reconstruction and collision in I-cells — 240

Perform reconstruction and collision in N-cells — 250

T->T+1 — 270

end? — 260

end

Figure 5

Compute local normal vector $\hat{n}$ and
tangential vectors $\hat{\tau}_i$ , if necessary — 300

Extrapolate macroscopic values in time
or space to obtain extrapolated
macroscopic values — 310

Compute B and $\vec{b}$ of the linearized
system $\vec{N} = B\vec{X}+\vec{b}$ — 320

Solve the linearized system $\vec{N} = B\vec{X}+\vec{b}$ to
obtain actual macroscopic values — 330

Compute unknown populations from the
linearized system $\vec{N} = B\vec{X}+\vec{b}$ based on
the actual macroscopic values — 340

Figure 6

Fig. 7a  Fig. 7b  Fig. 7c

Figure 9

Figure 10

Figure 11

Figure 11

Case 1

$\chi_2^{crit}$
$\chi_1^{crit}$
$\chi_2^{crit} = \chi_1^{crit}$
$\nu_1^{crit}$ $\nu_2^{crit}$

**Fig. 8a**

Case 2

$\nu_1^{crit}$ $\nu_2^{crit}$

**Fig. 8b**

Case 3

$\chi_2^{crit}$
$\chi_1^{crit}$
$\nu_1^{crit} = \nu_2^{crit}$

**Fig. 8c**

1.25%

a)

7.5%

300
320
310

b)

25%

300
320
330
310

c)

35%

330
310

d)

50%

330
310

e)

100%

330
310

f)

Figure 12

Figure 13

Figure 14

0.14s, 7.5%

a)

0.24s, 12.6%

b)

0.28s, 15%

c)

0.33s, 17.5%

d)

0.38s, 20%

e)

0.47s, 25%

f)

Figure 15

0.09s, 5%

0.18s, 10%

0.227s, 12.8%

a)

b)

c)

410

410

410

400

400

400

0.32s, 17.5%

0.35s, 20%

0.45s, 25%

d)

e)

f)

420

430

410

410

440

400

400

400

Figure 16

Figure 17

0.3s, 1.25%

2.5s, 10%

a)

b)

7.52s, 30%

15s, 60%

c)

d)

20s, 80%

25s, 100%

e)

f)

Figure 18

Figure 19a

Figure 19b

EP 1 260 920 A1

**European Patent Office**

**EUROPEAN SEARCH REPORT**

Application Number

EP 01 11 2579

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SETA T ET AL: "Lattice Boltzmann scheme for simulating two-phase flows" JSME INTERNATIONAL JOURNAL, SERIES B (FLUIDS AND THERMAL ENGINEERING), MAY 2000, JSME, JAPAN, vol. 43, no. 2, pages 305-313, XP001028654 ISSN: 1340-8054 * the whole document * | 1,2,18, 19 | G06F17/50 |
| A | XIAOWEN SHAN ET AL: "Multicomponent lattice-Boltzmann model with interparticle interaction" JOURNAL OF STATISTICAL PHYSICS, OCT. 1995, USA, vol. 81, no. 1-2, pages 379-393, XP001028553 ISSN: 0022-4715 * the whole document * | 1,2,18, 19 | |
| A | REIDER M B ET AL: "Accuracy of discrete-velocity BGK models for the simulation of the incompressible Navier-Stokes equations" COMPUTERS & FLUIDS, MAY 1995, UK, vol. 24, no. 4, pages 459-467, XP001028557 ISSN: 0045-7930 * the whole document * -/-- | 1,2,18, 19 | TECHNICAL FIELDS SEARCHED (Int.Cl.7) G06F B29C |

The present search report has been drawn up for all claims

| Place of search | Date of completion of the search | Examiner |
|---|---|---|
| THE HAGUE | 26 October 2001 | Guingale, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

Application Number
EP 01 11 2579

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SUCCI S: "Lattice Boltzmann equation: failure or success?" EUROCONFERENCE ON THE MICROSCOPIC APPROACH TO COMPLEXITY IN NON-EQUILIBRIUM MOLECULAR SIMULATIONS, LYON, FRANCE, 15-19 JULY 1996, vol. 240, no. 1-2, pages 221-228, XP001030041 Physica A, 1 June 1997, Elsevier, Netherlands ISSN: 0378-4371 * the whole document * | 1,2,18, 19 | |
| A | WO 97 21195 A (EXA CORP) 12 June 1997 (1997-06-12) | | |
| A | WO 01 23163 A (MOLDFLOW CORP) 5 April 2001 (2001-04-05) | | |

TECHNICAL FIELDS SEARCHED (Int.Cl.7)

The present search report has been drawn up for all claims

| Place of search | Date of completion of the search | Examiner |
|---|---|---|
| THE HAGUE | 26 October 2001 | Guingale, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 11 2579

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2001

| Patent document cited in search report | | Publication date | Patent family member(s) | | Publication date |
|---|---|---|---|---|---|
| WO 9721195 | A | 12-06-1997 | US | 5848260 A | 08-12-1998 |
| | | | EP | 0870283 A1 | 14-10-1998 |
| | | | JP | 2000502200 T | 22-02-2000 |
| | | | WO | 9721195 A1 | 12-06-1997 |
| WO 0123163 | A | 05-04-2001 | AU | 4023901 A | 30-04-2001 |
| | | | WO | 0123163 A1 | 05-04-2001 |

EPO FORM P0459

For more details about this annex : see Official Journal of the European Patent Office, No. 12/82